# EUROPÄISCHE PATENTSCHRIFT

(11) **EP 3 387 373 B1**
(45) Veröffentlichungstag und Bekanntmachung des Hinweises auf die Patenterteilung: **03.02.2021**
(21) Anmeldenummer: 16809039.7
(22) Anmeldetag: 09.12.2016
(51) Int. Cl.: G01B 11/25

(54) **FORMERMITTLUNGSVERFAHREN**
SHAPE DETERMINATION METHOD
PROCÉDÉ DE DÉTERMINATION DE FORME

(30) Priorität: 11.12.2015 DE 102015121673
(43) Veröffentlichungstag der Anmeldung: 17.10.2018
(73) Patentinhaber: SmartRay GmbH, 82515 Wolfratshausen (DE)
(72) Erfinder: REITER, Mathias, 82061 Neuried (DE)
(74) Vertreter: Weickmann & Weickmann PartmbB
(86) Internationale Anmeldenummer: PCT/EP2016/080391
(87) Internationale Veröffentlichungsnummer: WO 2017/097959

(56) Entgegenhaltungen:
- EP-A2- 1 780 502
- DE-A1-102006 036 586
- DE-A1-102008 010 965
- US-A1- 2002 060 795
- US-B1- 6 233 049

## Beschreibung

### I. Anwendungsgebiet

Die Erfindung betrifft die 3D-Formermittlung.

### II. Technischer Hintergrund

Die Bestimmung der die Form 3-dimensionaler Konturen wiedergebenden Daten, insbesondere von Erhebungen auf im Prinzip ebenen Basisflächen, wird in der Industrie häufig benötigt, um definiert angebrachte Erhebungen wie Kleber, Punkte, Kleberaupen, Schweißnähte, Beschichtungen etc. einer Qualitätskontrolle zu unterziehen.

Die Ermittlung der Form-Daten oder anderer, mit der Oberflächenform zusammenhängender Ergebnisdaten, z. B. des Volumens der Erhebung, wird dabei häufig mittels des Lichtschnittverfahrens durchgeführt.

Dabei wird ein fächerförmiger, also in nur einer Ebene aufgespreizter, Lichtstrahl auf die zu untersuchende Oberfläche gegeben und unter einem Winkel, meist einem spitzen Winkel, zur Bestrahlungsrichtung beobachtet, so dass der Verlauf des Abbildes des fächerförmigen Strahles auf der Oberfläche dort vorhandene Erhebungen erkennen lässt, indem auch das beobachtete Abbild dann eine Erhöhung zeigt, wenn der linienförmig auftreffende Lichtstrahl-Fächer quer über diese Erhebung hinweg verläuft.

Derartige einzelne Bilder der Lichtlinie auf dem Objekt werden - während sich das Objekt relativ und in Querrichtung zur Lichtlinie bewegt - in kurzen zeitlichen Abständen vielfach angefertigt, so dass durch Hintereinanderstellung dieser einzelnen Höhenschnitte, also Scans, die 3-dimensionale Oberflächengestaltung ermittelt werden kann, und/oder damit zusammenhängende Parameter wie Höhe, Volumen, Breite, Lage der Erhebungen usw.

Die meist künstlich aufgebrachten Erhebungen sollen in der Regel in Time während des laufenden Herstellungsprozesses eines Objektes detektiert werden, so dass eine sehr hohe Erkennungsgeschwindigkeit und Verarbeitungsgeschwindigkeit dieser Konturermittlung notwendig ist, wenn beispielsweise das Objekt mit einer Geschwindigkeit von 600 m/min unter der Lichtlinie durchläuft.

Wenn das Detektieren beispielsweise mittels eines handelsüblichen Flächensensors mit 512 x 512 Pixeln mit 30 Hz, also 30 Scans pro Sekunde, erfolgt, müssen pro Sekunde fast 8 Millionen Datensätze verarbeitet werden, wenn pro Pixel nur ein Datensatz unterstellt wird. Ein Datensatz besteht jedoch mindestens aus zwei einzelnen Datenfeldern (Position und Lichtintensität), unter Umständen auch mehr.

Dementsprechend kann sowohl die Mindestzeit zwischen den einzelnen Scans, bedingt durch den optischen Sensor, als auch die Verarbeitungsgeschwindigkeit der so ermittelten Bilddaten durch die nachgeschaltete elektronische Auswerteeinheit die begrenzende Größe darstellen.

Die Mindestzeit zwischen den einzelnen Scans ist die Summe aus einerseits der immer benötigten, und im Wesentlichen auch immer gleich langen Belichtungszeit des Sensors und der benötigte Zeit für das Auslesen der Bilddaten aus dem optischen Sensor in die nachgeschaltete Verarbeitungseinheit, wobei diese Auslesezeit je nach Sensortyp von der Anzahl der ausgelesenen Datensätze, also ausgelesenen Pixel, abhängen kann.

In diesem Zusammenhang sind unterschiedliche Arten von flächigen optischen Sensoren zu unterscheiden:
- Bei fast allen flächigen optischen Sensoren lässt sich vor Beginn des Auslesens vorgeben, dass nur die Bilddaten bestimmter Zeilen und/ oder Spalten der in aller Regel rasterförmig angeordneten Pixeln des flächigen, optischen Sensors ausgelesen werden sollen oder auch nur die Bilddaten bestimmter, vor Beginn des Auslesens, insbesondere vor der Anfertigung der Aufnahme, festgelegter, insbesondere nach Zeilennummern und Spaltennummern festgelegter, Auslese-Fenster innerhalb des Sensor-Fläche.
- Bei bestimmten Sensor-Typen ist es möglich, mit dem Auslesen der Bilddaten an einem der Enden des z. B. etwa in Zeilen-Richtung verlaufenden linienförmigen Abbildes der Lichtlinie zu beginnen, und abhängig von der ermittelten Lage und Verlaufstendenz des Beginns dieses Abbildes im weiteren Verlauf fortlaufend immer nur einen relativ kleinen, sich quer zum Verlauf des Abbildes erstreckenden, Fenster-Bereich der Bilddaten erst festzulegen und auszulesen, nämlich den Bereich, in dem aufgrund der Lage in den vorhergehenden Fenster-Bereichen die Lage des Abbildes vermutlich liegen wird.

Beides ermöglicht es, die Menge an auszulesenden Bilddaten bei jedem Scan optimal niedrig zu halten, jedoch ist der letztgenannte Sensor-Typ häufig nicht oder nicht mit den gewünschten Parametern verfügbar oder besitzt andere Nachteile.

Die Verarbeitungsgeschwindigkeit der ausgelesenen Bilddaten hängt einerseits von der zu verarbeitenden Datenmenge und andererseits von der Art der Verarbeitungsoperationen und deren Anzahl ab.

Im Idealfall ist die Zeit zum Verarbeiten der Datenmenge eines Scans gleich kurz oder kürzer als die Mindestzeit zwischen den einzelnen Scans, oder zumindest ist die durch den Verarbeitungsprozess vorgegebenen Mindestzeit zwischen den aufeinanderfolgenden Daten-Einleseoperationen der einzelnen Scans in die Verarbeitungseinheit gleich kurz oder kürzer als die Mindestzeit zwischen den Scans, indem die Verarbeitung der ausgelesenen Bilddaten sequenziell so erfolgt, dass der Zeitbedarf für die einzelnen Bearbeitungsstufen jeweils unter der Mindestzeit zwischen den Scans liegt.

Die sich so ergebende Scanfrequenz soll im Ergebnis so hoch liegen, dass bei maximaler Laufgeschwindigkeit des zu beobachtenden Objektes, also der Produktionsmaschine etc., die einzelnen Scans auf dem Objekt mit einen so kurzem räumlichen Abstand hintereinander durchgeführt werden, das eine quasilückenlose Überprüfung der interessierenden Oberflächendaten möglich wird.

Um beim Beispiel der Kontrolle einer im laufenden Prozess auf einer Oberfläche aufgebrachten Kleberaupe zu bleiben, wird entlang dieser Kleberaupe vielfach ein Scan durchgeführt, und ermittelt, welche Höhe, Breite und/oder Querschnittfläche die Kleberaupe an jedem einzelnen Scan hatte.

Trotz unterschiedlicher Konsistenz des Klebers und des Trägheitsverhaltens der die Kleberaupe aufbringenden Düsen ist somit sichergestellt, dass keine die spätere Qualität der Klebeverbindung beeinflussenden Fehlstellen in der Kleberraupe auftreten können.

Aus der DE 10 2006 036 586 A1 sind die Merkmale des Oberbegriffs des Anspruchs 1 bekannt, insbesondere, aus dem Sensor nur interessierende Bereiche in Form von Fenstern, in denen sich gemäß einem vorhergehenden Scan das Abbild des Lichtbandes befinden müsste, auszulesen, um die zu verarbeitende Datenmenge zu verringern. Die aufeinanderfolgenden Scans werden dabei offensichtlich von Beginn an immer mit der gleichen Auflösung durchgeführt.

Aus der DE 10 2012 015 605 A1 ist ferner bekannt, einen vorausgehenden Scan mit geringerer Auflösung durchzuführen als einen nachfolgenden Scan.

Ferner beschreibt die US 2002/060795 A1 eine Vorrichtung mit den Merkmalen des Oberbegriffs des Anspruchs 1 sowie ein Verfahren, mittels welchem mit hoher Geschwindigkeit Abmessungen und andere Merkmale von Objekten erfassbar sind. Dies wird beispielsweise erreicht, indem mehrere Bilder bei unterschiedlichen Belichtungszeiten und Lichtintensitäten aufgenommen werden.

Für den Fall, dass eine mit dem Lichtschnitt-Triangulationsverfahren aufgenommene Lichtlinie eine Lücke aufweist, schlägt DE 10 2008 010 965 A1 vor, die Belichtungsmenge auf den Sensor für diesen lückenbehafteten Bereich vorzunehmen, beispielsweise durch eine geänderte Belichtungszeit, geänderte Blende oder geringere Bestrahlungsleistung.

Ferner ist ein Verfahren und eine Vorrichtung zur schnellen Bestimmung von dreidimensionalen Konturen unter Anwendung des Lichtschnitt-Triangulationsverfahrens aus der EP 1 780 502 A2 bekannt, bei welchem nur der benötigte Teil der Bilddaten der Einzelbilder aus dem optischen Sensor ausgelesen und weiterverarbeitet werden.

### III. Darstellung der Erfindung

### a) Technische Aufgabe

Es besteht daher die Aufgabe, eine möglichst hohe Scan-Geschwindigkeit insbesondere bei solchen flächigen Sensoren zu erreichen, die für das selektive Auslesen von Daten lediglich aus auf dem Sensor festgelegten Auslese-Fenstern die Festlegung aller Fenster vor Durchführung des Scans, also der Aufnahme durch den Sensor, ermöglichen oder fordern.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Ausgegangen wird von dem bekannten Verfahren zur berührungslosen Ermittlung der Oberflächen-Daten einer dreidimensionalen Oberflächen-Kontur von Objekten mittels des Lichtschnitt-Triangulationsverfahrens, indem mittels eines fächerförmigen Lichtstrahles eine Lichtlinie auf der Kontur aufgebracht und unter einem davon abweichenden Betrachtungswinkel mittels eines flächigen Sensors eine Aufnahme angefertigt wird, die ein Linien-Abbild auf dem flächigen Sensor erzeugt, aus dem aufgrund der bekannten Anordnung aller beteiligten Komponenten der dreidimensionale Verlauf der Lichtlinie auf dem Objekt ermittelt werden kann, und aus vielen nebeneinander gelegten Lichtlinien und Linien-Abbildern die gesamte Oberflächen-Kontur des Objektes bestimmt werden kann.

Der Grundgedanke beim erfindungsgemäßen **Verfahren** besteht darin, bei den Mess-Scans nur einen Teil der Bilddaten aus dem optischen Sensor auszulesen. Dadurch reduziert sich die Auslesezeit und damit die Mindestzeit zwischen zwei aufeinander folgenden Scans und es reduziert sich vor allem die zu verarbeitende Datenmenge, was den Zeitbedarf für die gesamte nachfolgende Datenverarbeitung reduziert.

In diesem Zusammenhang ist es bereits bekannt, auf dem flächigen Sensor Auslese-Fenster festzulegen, die aneinander anschließen oder einander etwas überlappen, und so liegen und dimensioniert sind, dass das Linienabbild der Lichtlinie vollständig innerhalb des durch die Fenster gebildeten Fensterbereiches liegt und nur noch die Bilddaten aus dem Fenster-Bereich, also der durch die Summe der Fenster definierten Fläche des flächigen Sensors, auszulesen.

Allerdings werden bei den bekannten Lösungen
- entweder die Fenster für jeden nächsten Scan ausgehend vom vorangehenden Scan und der dabei festgestellten Lage des Linien-Abbildes auf dem Sensor festgelegt
- oder es wird bei einem neuen Scan am einen Ende des Linien-Abbildes dessen Position festgestellt, dort das erste Fenster definiert und ausgehend von der im ersten Fenster festgestellten Verlaufsrichtung des Linienabbildes das sich daran anschließende Fenster eines nach dem anderen - vorzugsweise erst während des Auslesevorganges - festgelegt hinsichtlich Größe und Position, was aber einen relativ hohen Rechenaufwand und damit Zeitaufwand bedeutet.

Ein weiterer Nachteil dieser Vorgehensweisen besteht darin, dass zusätzlich zu dem Linienabbild auf dem Sensor vorhandene, beleuchtete Bereich abseits des Linienabbildes dabei nicht erkannt werden, vor allem wenn das Linienabbild ohne Lücke durchgehend vorhanden ist, und auch bei Auftreten einer Lücke in der Lichtlinie dadurch die Festlegung von zutreffenden Fenstern für den nächsten Scan sehr problematisch ist.

Erfindungsgemäß wird deshalb so vorgegangen, dass zunächst einmal festgestellt wird, wo überall auf dem Sensor beleuchtete Bereiche, also ein Abbild vorhanden ist, was ja Abbild-Anteile sogar zusätzlich zu einem durchgehenden Linienabbild sein können aufgrund von Reflexionen oder anderen Besonderheiten, die aber erkannt werden sollen.

Zu diesem Zweck wird zuerst einmal ein sog. Lage-Scan durchgeführt, um alle auf dem Sensor vorhandenen, beleuchteten Flächen hinsichtlich ihrer Lage und vorzugsweise auch ihrer Gestalt zu ermitteln. Dieser Lage-Scan wird nicht als Mess-Scan verwendet, geht also nicht in die Ergebnisdaten ein, die die zu ermittelnde Kontur der Werkstück-Oberfläche wiedergeben.

Basierend auf der beim Lage-Scan ermittelten Lage, also insbesondere dem Verlauf, und auch der Gestalt, insbesondere der Breite, des Linien-Abbildes werden für den nachfolgenden Mess-Scan automatisch die Auslese-Fenster so festgelegt, dass sie insbesondere in Verlaufsrichtung des Linien-Abbildes aneinander anschließen oder vorzugsweise überlappen und dieser Fenster-Bereich in Summe das gesamte Linien-Abbild enthält.

Für den Lage-Scan werden zwar die Daten der gesamten Fläche des Sensors erfasst, aber dennoch versucht, die Datenmenge und/oder den Auswertevorgang zu beschleunigen, beispielsweise auf folgende Weise:
Die erste Methode besteht darin, den Lage-Scan mit geringerer Auflösung durchzuführen als den Mess-Scan.

In der Regel werden beim Mess-San aus den festgelegten Bereichen die Helligkeitswerte - und natürlich die Positionen auf dem Sensor - aller Pixel ausgelesen. Bei einer verringerten Auflösung für den Lage-Scan werden nicht die Helligkeitswerte aller Pixel ausgelesen, sondern nur noch eines solchen Teils der Pixel, die immer noch mit ausreichender Genauigkeit die Lage, also insbesondere den Verlauf und die Gestalt des Linien-Abbildes, wiedergeben, jedenfalls genau genug, um darauf basierend automatisch die Auslese-Fenster für die nur noch auszulesenden Daten für den oder die anschließenden Mess-Scans festzulegen.

Eine erste Variante besteht darin, die unmittelbar aneinander angrenzenden Pixel zu einer Pixelgruppe zusammen zu fassen und als ein einziges virtuelles Pixel zu behandeln. Insbesondere können vier der in der Regel in einem rechtwinkligen Raster zueinander angeordneten Pixel, die gemeinsam ein Quadrat bilden, zu einem einzigen virtuellen Pixel zusammengefasst werden, oder auch die in einem Quadrat mit vier Pixel Kantenlänge liegenden sechszehn Pixel.

Als Lage des virtuellen Pixels kann z.B. das Zentrum der zusammengefassten Pixelgruppe, also hier der Quadrate, dienen oder auch die Lage des Pixels mit dem höchsten Helligkeitswert innerhalb dieser Pixelgruppe.

Als Helligkeitswert des virtuellen Pixels kann z.B. Ein Mittelwert der Helligkeitswerte aller Pixel der Pixelgruppe oder auch die Summe der Helligkeitswerte aller Pixel der Pixelgruppe gewählt werden oder auch der Höchste innerhalb der Pixelgruppe bei einem Pixel auftretender Helligkeitswert.

In dem nur noch die Daten der virtuellen Pixel weiter verarbeitet werden müssen - eventuell auch nur ausgelesen werden müssen, nämlich falls der flächige Sensor einen integrierten Daten-Zwischenspeicher und eine Zwischen-Auswerteeinhaltung umfasst - reduziert dies den Rechenaufwand und damit Zeitaufwand für die Bestimmung der Lage des Abbildes, insbesondere Linien-Abbildes, insbesondere beim Lage-Scan, enorm.

Da die virtuellen Pixel nunmehr auf dem flächigen Sensor beabstandet liegen, kann für die Ermittlung des Verlaufes des Linien-Abbildes die Lücke zwischen benachbarten virtuellen Pixeln durch eine gerade Verbindungslinie als virtuelles Teil des Linien-Abbildes geschlossen werden.

Eine andere Variante besteht darin, den Helligkeits-Schwellwert, ab dem ein Auslesen eines Pixels bewirkt wird, indem es als beleuchtetes Pixel gilt, für den Lage-Scan höher zu setzen als beim anschließenden Mess-Scan.

Eine weitere Variante besteht darin, in jeder der beiden Verlaufsrichtungen des flächigen Sensors, also in Zeilenrichtung ebenso wie in Spaltenrichtung, nur jeweils die Daten von in einem bestimmten Pixelabstand zueinander liegender Pixel, also zum Beispiel jedes fünften oder jedes zehnten Pixels, auszulesen, wobei der gewählte Pixelabstand in den beiden Erstreckungsrichtungen des jeweiligen Sensors unterschiedlich sein kann, insbesondere wenn ganz grob der primäre Verlauf des Linien-Abbildes bekannt ist.

Für den mindestens einen sich an den Lage-Scan anschließenden Mess-Scan wird eine höhere Auflösung verwendet,
- beispielsweise festgelegt nach den oben beschriebenen Methoden, aber eben mit anderen Randbedingungen beziehungsweise Grenzwerten,
- oder ein festgelegtes mehrfaches der für den Lage-Scan benutzten Auflösung, insbesondere die volle Auflösung, also die Helligkeitswerte sämtlicher Pixel des flächigen Sensors ausgelesen und als Einzelbild-Rohdaten verwendet.

Für die Effizienz des Verfahrens ist es ein wichtiger Punkt, wie oft ein solcher Lage-Scan zusätzlich zu den Mess-Scans durchgeführt werden muss, da ja nur die Daten der Mess-Scans zu den Ergebnisdaten beitragen.

Falls man sichergehen will, auch keine sehr kleinen, unerwartet auftretenden, beleuchteten Bereiche auf dem Sensor unberücksichtigt zu lassen, wird man nach jedem Lage-Scan nur einen Mess-Scan durchführen und danach wieder einen neuen Lage-Scan.

Dann muss die Durchführung des Lage-Scans und die in der Folge stattfindende automatische Festlegung der Fenster besonders schnell vor sich gehen, um den zeitlichen Abstand zwischen den einzelnen Mess-Scans so gering wie möglich zu halten, denn davon abhängig muss die Fortschritts-Geschwindigkeit beim Scannen entlang der Oberfläche des zu überprüfenden Objektes festgelegt werden, um eine lückenlose Kontur-Bestimmung durchführen zu können.

Bei weniger kritischen Anwendungen muss dies nicht unbedingt erfolgen, sondern es können nach jedem Lage-Scan darauf aufbauend und auf Basis der dabei festgelegten Fenster mehrere Mess-Scans durchgeführt werden, beispielsweise eine festgelegten Anzahl von Mess-Scans immer mit den gleichen, beim Lage-Scan definierten, Fenstern.

Die erfindungsgemäße Methode besteht darin, - vor allem wenn abseits des Linien-Abbildes nicht mit weiteren beleuchteten Bereichen auf dem Oberflächensensor zu rechnen ist - nach jedem Mess-Scan zu prüfen, ob dieser Mess-Scan ein lückenloses Linien-Abbild ergeben hat oder nicht.

Falls das Linien-Abbild des letzten Mess-Scans eine Lücke enthalten hat, wird vor dem nächsten Mess-Scan nun
- entweder ein Lage-Scan durchgeführt
- oder diejenigen Fenster, die von der festgestellten Lücke im Linien-Abbild betroffen waren, in derjenigen Erstreckungsrichtung des Sensors, die primär quer zur Verlaufsrichtung des Linien-Abbildes gerichtet ist, auf die gesamte Erstreckung des Sensors vergrößert. Die primär quer zur Verlaufsrichtung des Linien-Abbildes gerichtete Erstreckungsrichtung des Sensors ist diejenige, die zur Verlaufsrichtung des Linien-Abbildes an dem jeweiligen Rand der Lücke den größeren Zwischenwinkel einnimmt.

Für diese vergrößerten Fenster werden dann erneut Fenster-Roh-Daten aus dem Sensor ausgelesen und es wird überprüft, ob damit die bisher vorhandene Lücke im Linien-Abbild in der Form geschlossen werden kann, dass das fehlende Stück des Linien-Abbildes versetzt zum Verlauf des restlichen Linien-Abbildes in den vergrößerten Fenstern enthalten war.

Wenn ja, wird ein nächster Mess-Scan - natürlich unter Benutzung auch der vergrößerten Fenster - durchgeführt. Wenn nein, wird ein neuer Lage-Scan durchgeführt.

Falls nach einem Lage-Scan mehrere Mess-Scans unmittelbar hintereinander durchgeführt werden, wird vorzugsweise auch geprüft, und zwar ab dem zweiten Mess-Scan nach vorangegangenem Lage-Scan, ob das ermittelte Linien-Abbild einen ersten Mindest-Sicherheitsabstand zu den Außenkanten des sich aus der Gesamtheit der festgelegten Fenster ergebenden Fensterbereiches, insbesondere quer zur Verlaufsrichtung des Linien-Abbildes, einhält.

Der Beginn und das Ende des Linien-Abbildes halten natürlich in Verlaufsrichtung des Linien-Abbildes zu den Rändern des Fensterbereiches keinen Sicherheitsabstand ein, da in Verlaufsrichtung das Linien-Abbild ja am Beginn, also der Außenkante des ersten Fensters, beginnt.

Ist dieser erste Mindest-Sicherheitsabstand für das gesamte Linien-Abbild eingehalten, so wird dieser Mess-Scan verwendet.

Wenn nicht, wird der Mess-Scan verworfen und ein neuer Lage-Scan durchgeführt.

Eine mögliche weitere Überprüfung besteht darin, nach jedem Mess-Scan, der ein vollständiges Linien-Abbild ergeben hat, zu prüfen, ob das ermittelte Linien-Abbild einen vorgegebenen zweiten Mindest-Sicherheitsabstand, der vorzugsweise größer ist als der erste Mindest-Sicherheitsabstand, wiederum gegenüber den Außenkanten des sich aus den festgelegten Fenstern in Summe ergebenden Fensterbereiches einhält.

Wenn ja, werden die bisher festgelegten Fenster auch für den nächsten Mess-Scan verwendet, der unmittelbar nach dem vorangehenden Scan, also ohne dazwischen einen neuen Lage-Scan durchzuführen, erstellt wird.

Wenn nicht, wird für den nächsten Mess-Scan dasjenige Fenster, in dem sich die entsprechende Stelle mit dem unterschrittenen zweiten Mindest-Sicherheitsabstand befand, so erweitert, dass innerhalb dieses Fensters der vorgegebene zweite Mindest-Sicherheitsabstandeingehalten wird, und der so veränderte Fensterbereich für den nächsten Mess-Scan verwendet.

Auf diese Art und Weise können häufig mehrere Mess-Scans hintereinander nach einem Lage-Scan durchgeführt werden.

Auch die Art der Festlegung der Fenster hat einen erheblichen Einfluss auf die Effizienz des Verfahrens, denn je kleiner und dennoch zweckerfüllend die Fenster und der sich daraus ergebende Fensterbereich festgelegt werden kann, umso geringer ist die Menge der auszulesenden und weiterzuverarbeitenden Daten. Vorzugsweise sind die Fenster rechteckig, und ihre Kanten verlaufen parallel zu den beiden ebenfalls im rechten Winkel zueinander stehenden Erstreckungsrichtungen des flächigen Sensors.

Darauf aufbauend oder auch unabhängig davon kann in derjenigen Erstreckungsrichtung des Sensors, die primär in Richtung der Breite des Lichtlinien-Abbildes - eine entsprechende Definition wurde weiter oben erläutert - verläuft, die Kantenläng des Fensters quer zur primären Verlaufsrichtung des Linien-Abbildes als ein vorbestimmtes Vielfaches der Breite des Lichtlinien-Abbildes festgelegt, falls bei dem Lage-Scan die Breite des Lichtlinien-Abbildes bestimmbar ist.

Vorzugsweise beträgt die Kantenlänge mindestens das Fünffache, besser mindestens das Achtfache, besser mindestens das Zehnfache der Breite des Lichtlinien-Abbildes.

Häufig besteht jedoch eine vorgegebene Randbedingung darin, dass der verwendete flächige Sensor nur eine vorgegebene maximale Anzahl von Fenstern akzeptiert, die als Auslesebereiche vorgegeben werden dürfen.

Bevorzugt werden die Fenster dann so festgelegt, dass die Länge des Sensors in derjenigen Erstreckungsrichtung, in der sich das Linien-Abbild primär erstreckt, die also den kleineren der beiden Zwischenwinkel zur Verlaufsrichtung des Linien-Abbildes einnimmt, durch diese Maximal-Anzahl von Fenstern dividiert und die so in dieser Erstreckungsrichtung erhaltene Fenster-Länge insbesondere vergrößert wird, beispielsweise um einen festgelegten Prozentsatz, etwa fünfzehn Prozent, als durchschnittliche Fenster-Länge in dieser Erstreckungsrichtung, um das gewünschte Überlappen der Fenster zu erreichen.

Die Fenster-Breite in der anderen Erstreckungsrichtung kann jeweils ebenfalls der durchschnittlichen Fensterlänge in der ersten Erstreckungsrichtung entsprechen, und die Fenster mit der sich aus der durchschnittlichen Fensterlänge ergebenden jeweiligen Überlappung in der ersten Erstreckungsrichtung angeordnet werden. Dabei müssen die Fensternatürlich versetzt in der zweiten Erstreckungsrichtung so angeordnet werden, dass in dem sich ergebenden Fensterbereich das Linien-Abbild vollständig aufgenommen ist, insbesondere unter Berücksichtigung der zuvor erwähnten Mindest-Sicherheitsabstände.

Größe und Gestalt der Fenster können jedoch auch abhängig von der Verlaufsrichtung des Linien-Abbildes an der jeweiligen Stelle variiert werden:
So könnte in einem ersten Schritt an der Stelle des Linien-Abbildes, welches unter einem Winkel von 45 Grad zu den beiden rechtwinklig aufeinander stehenden Erstreckungsrichtungen des flächigen Sensors verläuft, ein quadratisches Fenster mit einer Kantenlänge entsprechend der festgelegten durchschnittlichen Fensterlänge angeordnet werden.

In den benachbarten Abschnitten wird das Verhältnis von Länge zu Breite des Fensters analog zur Änderung der Verlaufsrichtung des Linien-Abbildes in diesem Bereich abgeändert, also je geringer der Zwischenwinkel der Verlaufsrichtung des Linien-Abbildes an dieser Stelle zu der ersten Erstreckungsrichtung ist, umso größer ist die Länge des Fensters in dieser Erstreckungsrichtung im Vergleich zu seiner Breite.

Für die Fälle, in denen es keinen Punkt auf dem Linien-Abbild gibt, der unter 45 Grad, also diagonal, zu den beiden Erstreckungsrichtungen verläuft, sondern der Zwischenwinkel immer kleiner oder immer größer im gesamten Verlauf des Linien-Abbildes zu einer der beiden Erstreckungsrichtungen ist, bleibt die durchschnittliche Fensterlänge in der primären Verlaufsrichtung des Linien-Abbildes bei allen Fenstern die Gleiche, die Fensterbreite wird jedoch
- größer gewählt, wenn der Zwischenwinkel zur ersten Erstreckungsrichtung überall größer als 90 Grad ist
- kleiner gewählt, wenn der Zwischenwinkel zur ersten Erstreckungsrichtung überall kleiner als 90 Grad ist.

Eine andere Methode der Festlegung der Fenster kann wie folgt ablaufen:
Das Linien-Abbild wird indes primärer Verlaufsrichtung unterteilt in eine vorbestimmte Anzahl von Abschnitten mit jeweils gleicher Länge.

Für jeden Abschnitt wird separat die Verlaufsrichtung des Abschnittes auf dem Sensor ermittelt, insbesondere die Anstiegswinkel β1 oder β2 dieses Abschnittes gegenüber der ersten Erstreckungsrichtung und/oder zweiten Erstreckungsrichtung des Sensors. In derjenigen Erstreckungsrichtung des Sensors, zu der der eine Anstiegswinkel geringer ist als der andere Anstiegswinkel, wird ein diesen Abschnitt des Linien-Abbildes vollständig einschließendes Fenster so festgelegt, dass
- die Kantenlänge des Fensters in Richtung dieser Erstreckungsrichtung des Sensors um einen ersten Sicherheitsfaktor größer ist als die Länge des Abschnittes des Linien-Abbildes in dieser Richtung und
- in der anderen Erstreckungsrichtung das Gleiche durchgeführt wird, aber mit einem unter Umständen andern zweiten Sicherheitsfaktor.

Bei einer maximal definierbaren Anzahl von Fenstern kann die Abschnittslänge die durchschnittliche Fensterlänge sein oder die ohne den vorgegebenen Faktor multiplizierte durchschnittliche Fensterlänge.

Die Abschnittslänge kann jedoch auch der Länge einer aneinander gereihten vorgegebenen Anzahl von Pixeln, insbesondere von 100 Pixeln, besser von 500 Pixeln, besser von 1000 Pixeln, des Sensors gewählt werden.

Hinsichtlich der Vorrichtung wird diese Aufgabe dadurch gelöst, dass eine Vorrichtung außer den gattungsgemäßen Komponenten, nämlich
- einer Laser-Lichtquelle,
- einer Detektoreinrichtung mit einem flächigen optischen Sensor und einer elektronischen Verarbeitungseinheit zur Verarbeitung der Bilddaten aus dem optischen Sensor und der Rechnung der Ergebnisdaten,
einen optischen Sensor von einer solchen Bauart aufweist, dass die Festlegung von Fenstern, aus denen ausschließlich Bilddaten ausgelesen werden solle, vor der Durchführung des Scans möglich ist oder gar erforderlich ist. Vorzugsweise ist der optische Sensor auch so ausgebildet, dass er einen internen Datenspeicher für Bilddaten und insbesondere auch eine interne Vor-Verarbeitungseinheit für die Daten im internen Datenspeicher zur Umrechnung in andere Daten umfasst.

Intern bedeutet in diesem Sinn, dass diese Elemente Bestandteil des Sensors sind und mit ihm eine bauliche Einheit bilden, insbesondere zusammen mit der Sensorfläche als elektronischer Chip ausgebildet sind.

In dem erfindungsgemäßen Verfahren nach Anspruch 1 wird in Schritt d) die Einzelbild-Ermittlung gemäß Schritt c) in einer Bewegungsrichtung, die quer zur Erstreckungsrichtung der Lichtlinie definiert ist, versetzt vielfach hintereinander durchgeführt, und dadurch werden vorzugsweise aus den so jeweils erhaltenen Einzelbild-Roh-Daten der Lichtlinien die die gesamte Oberflächen-Kontur beschreibenden Ergebnisdaten aufsummiert. In dem erfindungsgemäßen Verfahren nach Anspruch 1 wird in Schritt e) als Lage-Scan eine Einzelbild-Ermittlung gemäß Schritt c)_mit verringerter Auflösung durchgeführt, wobei aus der aus dem Lage-Scan bekannten Lage und der Gestalt des Linien-Abbildes auf dem flächigen optischen Sensor automatisch Fenster, insbesondere in Verlaufsrichtung des Linien-Abbildes (4) einander überlappende Fenster, auf dem Sensor so festgelegt werden, dass sie jeweils Teile des Linien-Abbildes enthalten und in der Summe das gesamte Linien-Abbild enthalten.

Gemäß einer bevorzugten optionalen Ausführungsform wird beim Lage-Scan die Auflösung der Einzelbild-Kompakt-Daten gegenüber der Einzelbild-Rohdaten verringert wird, indem die Lichtwerte einer Pixelgruppe von unmittelbar aneinander angrenzenden Pixeln der Einzelbild-Rohdaten, insbesondere im Quadrat zueinander benachbarter Pixel, insbesondere 4 oder 16 in einem Quadrat aneinander anliegender Pixel, zu einem einzigen virtuellen Pixel als Teil der Einzelbild-Kompaktdaten zusammengefasst werden mit
∘ entweder einer Lage des virtuellen Pixels im Zentrum der zusammengefassten Pixelgruppe und
∘ einem Helligkeitswert des virtuellen Pixels in Form eines Mittelwertes oder Summenwertes aller Pixel der Pixelgruppe,
∘ oder einer Lage des virtuellen Pixels an der Stelle des Pixels der betrachteten Pixelgruppe mit dem höchsten Helligkeitswert und
∘ einem Helligkeitswert des virtuellen Pixels entsprechend dem Helligkeitswert dieses hellsten Pixels der Pixelgruppe,

- und die zueinander beabstandeten virtuellen Pixel die die Lage und Gestalt des Linien-Abbildes wiedergebenden Einzelbild-Kompaktdaten bilden, wobei
- insbesondere die Lücken zwischen zueinander benachbarten virtuellen Pixeln durch gerade Verbindungslinien als virtuelle Teile des Linien-Abbildes verwendet werden.
   Gemäß einer anderen optionalen Ausführungsform wird ab dem zweiten Mess-Scan nach einem voran gegangenen Lage-Scan nach Durchführung dieses Mess-Scans
- geprüft, ob das ermittelte Linien-Abbild an jeder Stelle einen vorgegebenen ersten Mindest-Sicherheitsabstand, insbesondere quer zur Verlaufsrichtung des Linien-Abbildes, zu den Außenkanten des sich aus den überlappenden Fenstern ergebenden Fensterbereiches einhält,
- wenn ja, der Mess-Scan verwendet wird,
- wenn nein, der Mess-Scan verworfen und ein neuer Lage-Scan durchgeführt wird.

Nach einer weiteren optionalen Ausführungsform wird nach jedem Mess-Scan, der ein vollständiges Linien-Abbild (4) ergeben hat,
- geprüft, ob das ermittelte Linien-Abbild einen vorgegebenen zweiten Mindest-Sicherheitsabstand, der insbesondere größer ist als der ersten Mindest-Sicherheitsabstand, gegenüber den Außenkanten des sich aus den überlappenden Fenstern ergebenden Fensterbereiches eingehalten wird und
- wenn ja, die bisher verwendeten Fenster für den nächsten Mess-Scan verwendet werden,
- wenn nicht, für den nächsten Mess-Scan an der entsprechenden Stelle des Linien-Abbildes das um diese Stelle des Linien-Abbildes herum positionierte Fenster so erweitert wird, dass der vorgegebene zweite Mindest-Sicherheitsabstand eingehalten wird und der so veränderten Fenster-Bereich für den nächsten Mess-Scan verwendet wird.

Ferner ist gemäß einer optionalen Ausführungsform in derjenigen Erstreckungsrichtung, die primär in Richtung der Breite des Lichtlinien-Abbildes verläuft, die Kantenlänge des Fensters ein vorbestimmtes Vielfaches der Breite des Lichtlinien-Abbildes ist, vorzugsweise mindestens das 5-fache, besser mindestens das 8-fache, besser mindestens das 10-fache, besser mindestens das 20-fache, der Breite des Lichtlinien-Abbildes.

Gemäß einer weiteren optionalen Ausführungsform wird als vorgegebene Abschnitts-Länge des Abschnittes die primäre Teil-Länge eines Fensters gewählt, oder
als vorgegebene Abschnitts-Länge des Abschnittes eine Länge entsprechend einer Aneinanderreihung einer vorgegebenen Anzahl von Pixeln, insbesondere von 100, besser von 500, besser von 100 Pixeln des Sensors gewählt.

Die erfindungsgemäße Vorrichtung zur Durchführung des Verfahrens nach umfasst den flächigen optischen Sensor mit vorzugsweise Matrix-förmig angeordneten Pixeln und einer elektronischen Verarbeitungseinheit zur Bilddatenverarbeitung und Berechnung der Ergebnisdaten.

In einer bevorzugten optionalen Ausführungsform umfasst der optische Sensor einen internen Daten-Speicher und insbesondere eine interne Vor-Verarbeitungseinheit für die Daten im internen Datenspeicher.

### c) Ausführungsbeispiele

Ausführungsformen gemäß der Erfindung sind im Folgenden beispielhaft näher beschrieben. Es zeigen:
- Fig. 1:: eine Detektoreinheit gemäß der Erfindung in der Seitenansicht,
- Fig. 2a:: die Detektoreinheit der Figur 1 in der Frontansicht, jeweils im Betrieb,
- Fig. 2b: eine Aufsicht auf die Oberfläche des Objektes,
- Fig. 3a - c:: Darstellungen eines Linien-Abbildes auf einem flächigen Sensor,
- Fig. 4a:: eine Detailvergrößerung der Lichtlinie in deren Querrichtung,
- Fig. 4b:: die Bestimmung von virtuellen Pixeln auf dem flächigen Sensor,
- Fig. 5:: den Beginn eines Linien-Abbildes.

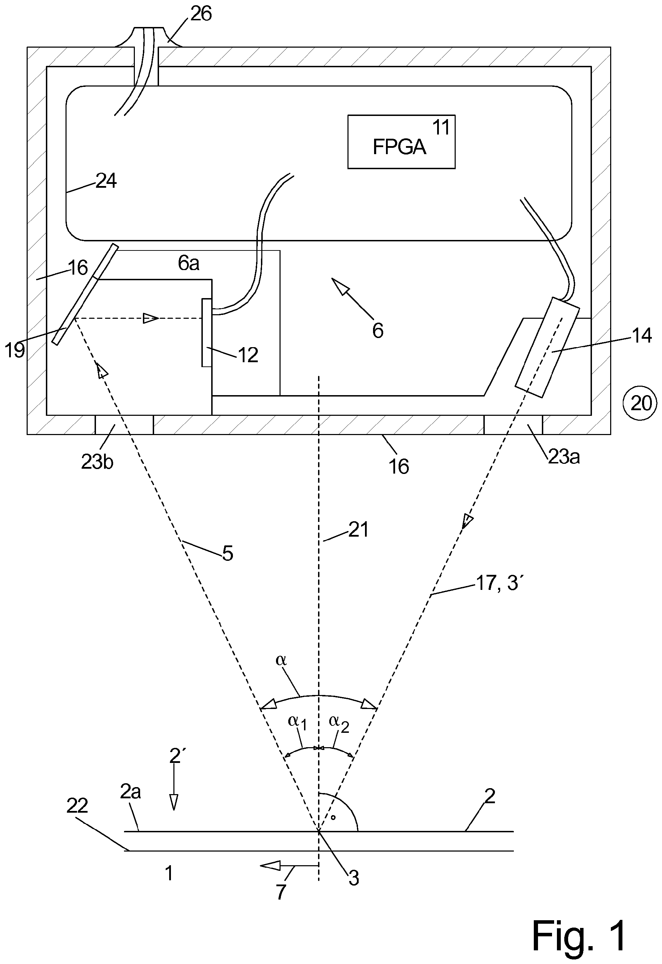

**Figur 1** zeigt eine Detektoreinheit in der Seitenansicht, die auch erkennen lässt, wie das bekannte Lichtschnitt-Triangulationsverfahren prinzipiell funktioniert:

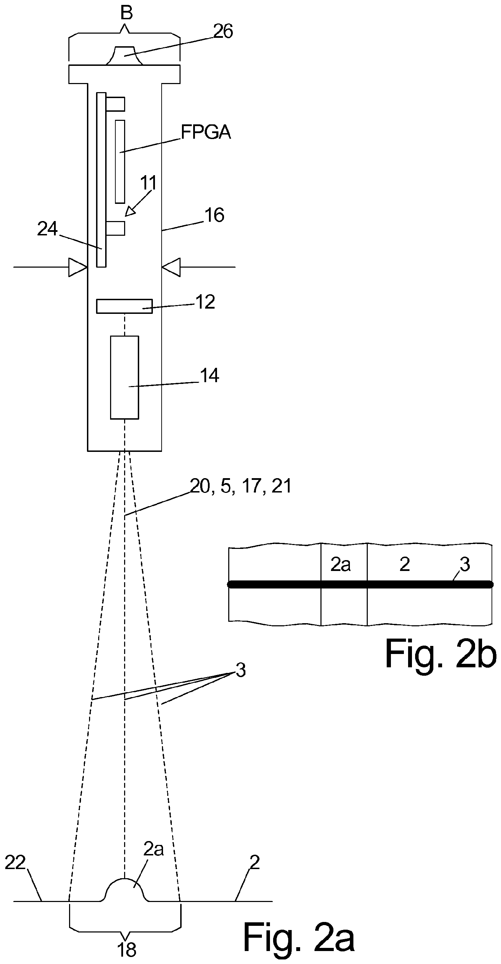

Dabei wird ein fächer-förmiger Lichtstrahl 3' auf die Oberfläche 2 eines Objektes 1 gerichtet und erzeugt dort aufgrund der Fächerform des Lichtstrahles 3' - wie in der Aufsicht der **Figur 2b** dargestellt - eine Lichtlinie 3.

Das von der Oberfläche 2 des Objektes 1 reflektierte Linien-Abbild 4 der Lichtlinie 3 wird von einer Detektoreinrichtung 6 aufgenommen, die aus z. B. einem flächigem, optischen Sensor 12 sowie einer damit verbundenen elektronischen Verarbeitungseinheit 11 zum Verarbeiten des vom Sensor 12 aufgenommenen Bildes und daraus berechnen der Einzelbild-Daten 10.

Damit sich auf dem optischen Sensor 12 ein Linien-Abbild 4 abzeichnet, welches Rückschlüsse auf die tatsächliche Kontur 2' der Oberfläche 2 an dieser Stelle zulässt, dürfen die Abstrahlrichtung 17 des Lichtstrahls 3 und die Blickrichtung 5 der Detektoreinheit 6 nicht zusammenfallen, sondern müssen sich durch einen Triangulationswinkel α unterscheiden. Vorliegend sind diese beiden Richtungen so gewählt, dass sie symmetrisch beidseits der Lotrechten 21 auf die Oberfläche 2 liegen, also zu dieser jeweils einen Zwischenwinkel α₁ = α₂ einnehmen.

Eine Unebenheit, beispielsweise eine Erhebung 2a, auf der Oberfläche 2 im Auftreffbereich des Lichtstrahles 3', wird auf der Oberfläche 2 keine gerade Lichtlinie 3 und damit auch auf dem Sensor 12 keine gerades Linien-Abbild 4, sondern ein Linien-Abbild 4 mit einer Aufwölbung darin ergeben, wobei diese Aufwölbung des Linien-Abbildes 4 abhängig von dem Triangulationswinkel α und der Aufteilung in die Zwischenwinkel α₁ und α₂ sich von der Form der Aufwölbung 2a der Kontur 2, geschnitten entlang der Mittelebene zwischen der Ebene des aufgebrachten Licht-Sprechers 3, der Abstrahlrichtung 17, und der Reflektionsrichtung, in welcher dieser Fächer förmiger Richtlinie drei reflektiert wird, der Blickrichtung 5 des Sensors 12, in der Regel einer lotrechten Ebene 21, unterscheiden kann.

Wegen der bekannten Winkel α, α₁, α₂ sowie der Fokussierung auf die Oberfläche und/oder der Bekanntheit des Abstandes der Detektoreinheit 6 von der Oberfläche 2 kann aus den Abmessungen des Linien-Abbildes 4 auf die tatsächlichen Abmessungen der Aufwölbung 2a auf der Oberfläche 2 rechnerisch geschlossen werden.

Wie **Figur 1** auch zeigt, sind nicht nur die erwähnten Komponenten der Detektoreinrichtung 6, sondern auch die Lichtquelle 14 zur Erzeugung des ausgesandten Lichtstrahles 3' gemeinsam innerhalb des Gehäuses 16 der Detektoreinheit untergebracht, wobei dieses Gehäuse 16 plattenförmig flach ist mit einer Hauptebene 20 parallel zu der durch Abstrahlrichtung 17 und Blickrichtung 5 aufgespannte Arbeitsebene und einer Breite B quer zu dieser Hauptebene 20, die nicht größer ist als die Beobachtungsbreite 18 des fächerförmigen Lichtstrahles 3, mit der dieser auf der Oberfläche 2 auftrifft.

Wie **Figur 1** zeigt, ist die Detektoreinheit auch von den Abmessungen in der Hauptebene 20 sehr kompakt aufgebaut, was dadurch erreicht wird, dass die Lichtquelle 14, in der Regel eine Laserpatrone, nahe des für den Lichtstrahl 3' vorgesehenen Durchlasses 23a im Gehäuse 16 angeordnet ist und der optische Sensor 12 nahe des anderen Durchlasses 23b, die sich beide in einer der Schmalseiten des Gehäuses 16 befinden, wobei zwischen diesem Durchlass 23b und dem optischen Sensor 12 eine Umlenkung des eintreffenden Lichtstrahls, also der Blickrichtung 5, über einen Spiegel 19 in eine Richtung parallel zu der Außenkante, in der sich die Durchlässe 23a, b befinden, erfolgt.

Sowohl der Sensor 12 als auch der Spiegel 19 sind dabei an einem Detektor-Basiskörper 6a befestigt, der seinerseits am Gehäuse 16 der Einheit fixiert ist.

Dadurch verbleibt auf der von der Außenseite mit den Durchlässen 23a, b abgewandten Hälfte des Gehäuses ausreichend viel Platz, um dort eine in der Hauptrichtung 20 des Gehäuses liegende Platine 24 anzuordnen, die die gesamte elektronische Verarbeitungseinheit 11 enthält und mit dem Sensor 12 über elektrische Leitungen ebenso in Verbindung steht wie mit der Lichtquelle 14. Die von der Verarbeitungseinheit 11 ermittelten Ergebnisdaten werden über einen Stecker 26 ausgegeben.

Die nach dem Lichtschnittverfahren hergestellten Einzelaufnahmen, die Scans S1, S2, S3 werden in zeitlich schneller Abfolge wiederholt, um die sich in Bewegungsrichtung 7 relativ zur Detektoreinheit 6 bewegende Oberfläche 2 des Objektes 1 ständig zu beobachten.

Da dies z. B. an einer Produktionsmaschine für das Objekt 1 oder die Aufwölbung 2a auf der Basisfläche 2, beispielsweise einer Kleberraupe auf einem Karton als Basisfläche 2, durchgängig geschehen soll, ist es notwendig, dass die Berechnung der Einzelbild-Daten aus den einzelnen Aufnahmen, den Scans, zeitaktuell geschieht, also von der Verarbeitungseinheit 11 die Einzelbild-Daten 10 genauso schnell, also im gleichen Rhythmus, geliefert werden müssen, wie die einzelnen Aufnahmen, die Scans S1, S2, S3 von dem Sensor 12 angefertigt werden.

Zusätzlich müssen ebenfalls Zeit-aktuell, also in Time, die Einzelbild-Daten 10 der hintereinander angefertigten Scans zu den Ergebnisdaten zusammengesetzt, insbesondere aufsummiert, werden, die durchgängig die Kontur 2' der Oberfläche 2, also insbesondere der Aufwölbungen 2a, wiedergeben.

Um einen schnellen Verfahrensablauf zu erreichen, wird versucht, die für das gewünschte Ergebnis, nämlich eine Bestimmung bestimmter geometrischer Parameter, wie etwa Höhe, Querschnittsvolumen etc., der Aufwölbung 2a relevante Datenmenge so früh wie möglich zu reduzieren und damit den für die Berechnung der Ergebnisdaten notwendigen Rechenaufwand zu minimieren.

Hierfür werden mehrere Methoden vorgeschlagen, die auch ergänzend zueinander eingesetzt werden:

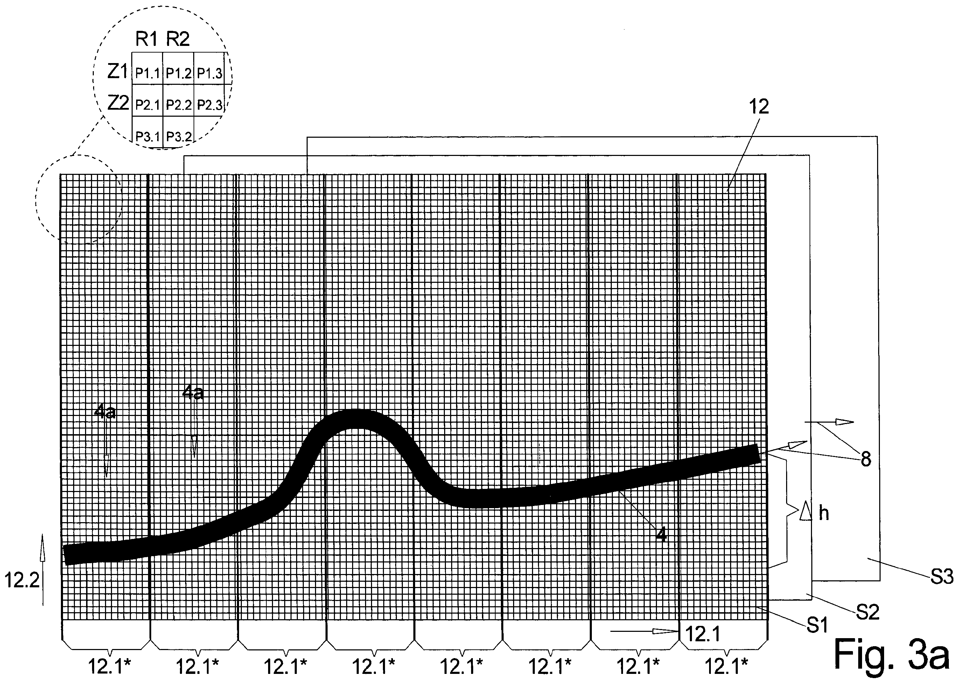

In den **Figuren 3a** - **c** sind Lichtlinien-Abbilder 4 dargestellt, wie sie sich auf dem flächigen, in diesem Fall rechteckigen, Sensor 12 der aus den sich in einer ersten Erstreckungsrichtung 12.1 erstreckenden Zeilen Z1, Z2 sowie dazu im rechten Winkel in einer zweiten Erstreckung Richtung 12.2 verlaufenden Reihen R1, R2 angeordneten Pixel P1.1, P1.2 bzw. P2.1 besteht.

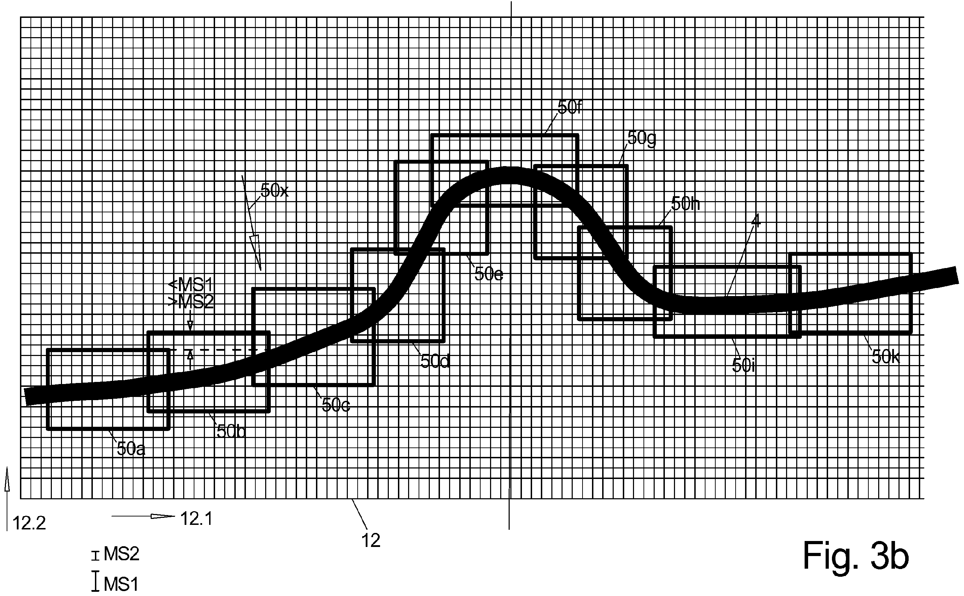

In **Figur 3b** ist die Grundidee ersichtlich, nämlich zur Erfassung dieses Linien-Abbildes 4 und dessen Auswertung nicht die Helligkeitswerte sämtlicher Pixel auf dem gesamten Sensor 12 auszulesen und in einer elektronischen Verarbeitungseinheit weiterzuverarbeiten, sondern nur die Pixel aus vorher festgelegten Fenstern 50a, 50b.. die jedoch in Summe einen Fensterbereich 50* ergeben, der das Linien-Abbild 4 vollständig enthält. Zu diesem Zweck müssen sich die einzelnen Fenster 50a, b gegenseitig mindestens berühren, vorzugsweise überlappen.

Dabei stellt sich das Problem, dass hierfür zunächst einmal die Lage des Linien-Abbildes auf dem Sensor 12 zumindest grob bekannt sein muss, um die Größe und Position der Fenster 50a,b definieren zu können, was bei den meisten Bauarten von Sensoren 12 vor Beginn des jeweiligen Scans für alle Fenster 50a, b erfolgt sein muss.

Für diese Lagebestimmung wird vor dem Mess-Scan, der mit der notwendigen, meist vollen, Auflösung des Sensors 12 durchgeführt wird, um eine möglichst genaue Konturbestimmung der zu vermessenden Oberflächenkontur 2' zu erhalten, ein Mess-Scan mit verringerter Auflösung durchgeführt, dessen Daten nicht in die Ergebnisdaten eingehen.

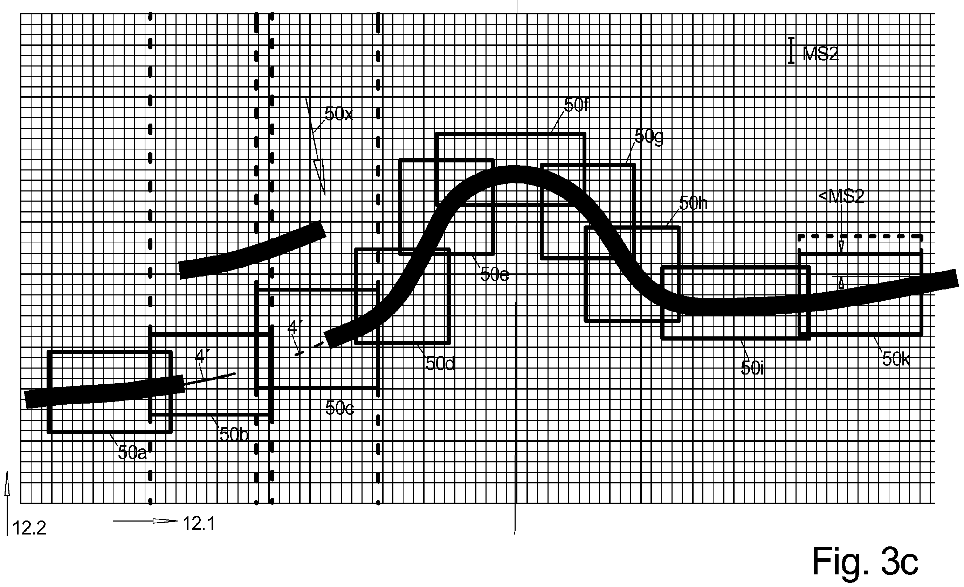

Bei dem Lage-Scan wird die gesamte Oberfläche des Sensors 12 ausgewertet, da sich beleuchtete Flächen auf dem Sensor auch abseits des eigentlich zu erwartenden Linien-Abbildes 4 befinden können, wie beispielsweise in **Figur 3c** dargestellt.

Es werden jedoch für diesen Lage-Scan vorzugsweise nicht die Helligkeitswerte aller Pixel P1.1 des Sensors 12 ausgelesen, sondern nur eine reduzierte Anzahl:
So können beispielsweise in jeder Erstreckungsrichtung 12.1, 12.2 des Sensors - beginnend mit dem jeweils ersten - nur jeweils der 5. 10. oder ein anders ganzzahliges Vielfaches der Pixel ausgelesen und verarbeitet werden.

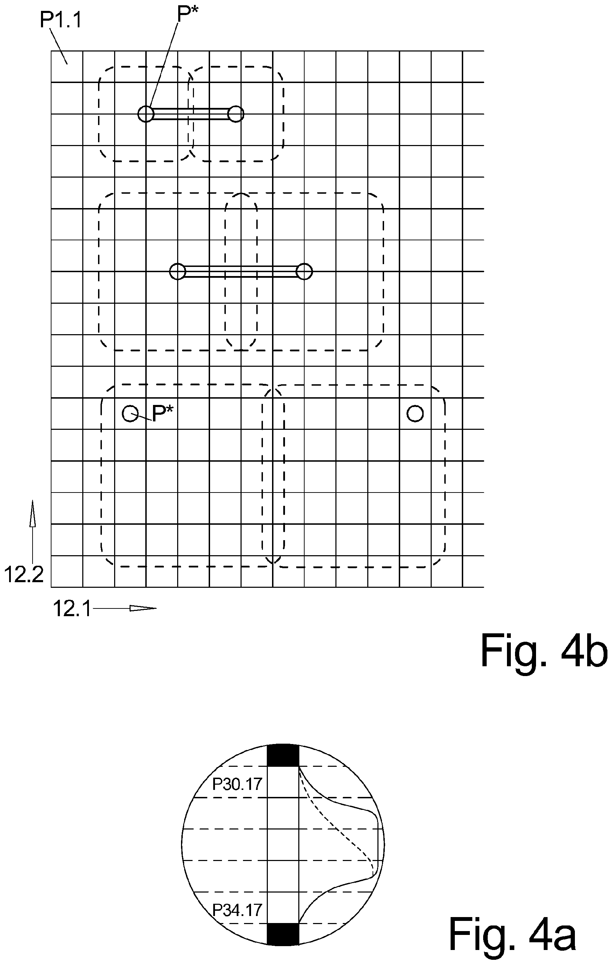

Eine andere Methode ist in **Figur 4b** **dargestellt:** So können für eine jeweils festgelegte Pixel-Gruppe, z. B. 4 im Quadrat zueinander liegende oder 16 im Quadrat zueinander liegende Pixel hinsichtlich ihrer Helligkeitswerte bereits beim Auslesen zusammengefasst werden zu einem einzigen virtuellen Pixel P*, wobei sich die Gruppen vorzugsweise nahtlos in beide Erstreckungsrichtungen 12.1, 12.2 aneinander anschließen oder in einer definierten Art und Weise auch geringfügig überlappen.

Es werden dann im Folgenden nur noch die Helligkeitswerte der virtuellen Pixel P* betrachtet, die nach einem vorgegebenen Algorithmus aus den Helligkeitswerten der Pixel dieser Pixel-Gruppe errechnet wird, beispielsweise als Durchschnittswert oder Summenwert der Helligkeitswerte der konkreten Pixel dieser Pixelgruppe.

Diejenigen virtuellen Pixel 50*, die einen Helligkeitswert oberhalb eines festgelegten Schwellenwertes besitzen, werden als im Bereich des Linien-Abbildes 4 liegend angenommen.

Um einen durchgehenden Grob-Verlauf des Linien-Abbildes 4 zu erhalten, können diese zueinander beabstandeten virtuellen Pixel P* durch Geraden rechnerisch verbunden werden, sodass dieser Polygonzug den groben Verlauf des Linien-Abbildes 4 auf dem Sensor 12 darstellt, anhand dessen für den nachfolgenden Mess-Scan die Position und Grüße der Fenster 50a, b definiert werden kann.

In **Figur 4b** im unteren Teil ist dargestellt, wie stattdessen für eine vorgegebene Gruppe von Pixeln - hier 25 im Quadrat zueinander angeordnete Pixel - das virtuelle Pixel P* ermittelt wird als das dasjenige Pixel, welches innerhalb der Pixelgruppe den höchsten Helligkeitswert besitzt, und nur dieses Pixel wird als virtuelles Pixel 50* mit einem Helligkeitswert weiterverarbeitet zur Bestimmung der Grob-Lage des Linien-Abbildes 4, z. B. wie oben erläutert.

Es kann ferner nach Ermittlung der virtuellen Pixel P*, die als beleuchtet und damit im Bereich des Linien-Abbildes vier liegend ermittelt wurden, um diese virtuellen Pixel herum in einem vorgegebenen Umfeld, z. B. die umgebenden 4 oder 16 Pixel herum, zusätzlich wieder die Helligkeitswerte jedes einzelnen Pixels konkret bestimmt werden, um zusätzlich nicht nur den Verlauf, sondern beispielsweise auch die Breite des Linien-Abbildes 4 zu ermitteln.

In **Figur 4a** ist - invers dargestellt - ein Querschnitt aus einem solchen Linien-Abbild 4 dargestellt, welche in diesem Fall eine Breite von 5 Pixeln, hier P30.17 bis P34.17, besitzt.

Damit ist zumindest an dieser Stelle die Breite B des Lichtlinien-Abbildes 4 bekannt, und bei Ermittlung der Breite an mehreren oder gar allen Stellen im Verlauf der Lichtlinie kann die maximale und/oder durchschnittliche Breite B des Linien-Abbildes 4 bestimmt werden.

Vor allem aber kann dieses Linien-Abbild 4 mit einer realen Breite B reduziert werden auf eine Breite mit nur einem Pixel, indem die Helligkeitswerte der in Querrichtung zum Licht Linien-Abbild 4 sich anschließenden Pixel zu einem Quer-Pixel zusammengefasst werden, entweder indem das in dieser Querrichtung den höchsten Helligkeitswert aufweisende Pixel als Quer-Pixel ausgewählt wird, oder einfach das mittlere Pixel, jedoch mit einem Helligkeitswert, der z. B. gemittelt ist über den Helligkeitswert aller 5 Pixel in Querrichtung.

Der Verlauf der Helligkeitswerte der Pixel in Querrichtung ist in zwei möglichen Ausformungen in Figur 4a angedeutet.

Auf diese Art und Weise kann durch Reduzierung auf ein einziges Pixel in der Breite B des Linien-Abbildes 4 ein sehr genauer Verlauf des Linien-Abbildes ermitteln werden.

Häufig ist die Anzahl an Auslese-Fenstern, die vorgegeben werden können, von der Bauform des Sensors 12 her begrenzt auf eine Maximal-Anzahl.

Wie die **Figuren 3a** - **c** zeigen, besitzt das Linien-Abbild 4 trotz seiner Aufwölbung in der Regel eine primäre Verlaufsrichtung, also diejenige Erstreckungsrichtung 12.1 oder 12.2 des flächigen Sensors 12, zu der die Verlaufsrichtung des Linien-Abbildes 4, also eine Gerade vom Anfang zum Ende des Linien-Abbildes 4, den geringeren Zwischenwinkel einnimmt.

Um die Längen der Fenster 50a1, 50a2 in der primären Verlaufsrichtung des Linien-Abbildes 4, z. B. in der Erstreckungsrichtung 12.1, zu ermitteln, kann beispielsweise gemäß **Figur 3a** die Länge des Sensors 12 in dieser Erstreckungsrichtung 12.1 durch die maximale Anzahl der zulässigen Fenster dividiert werden, woraus sich eine primäre Teillänge 12.1* ergibt.

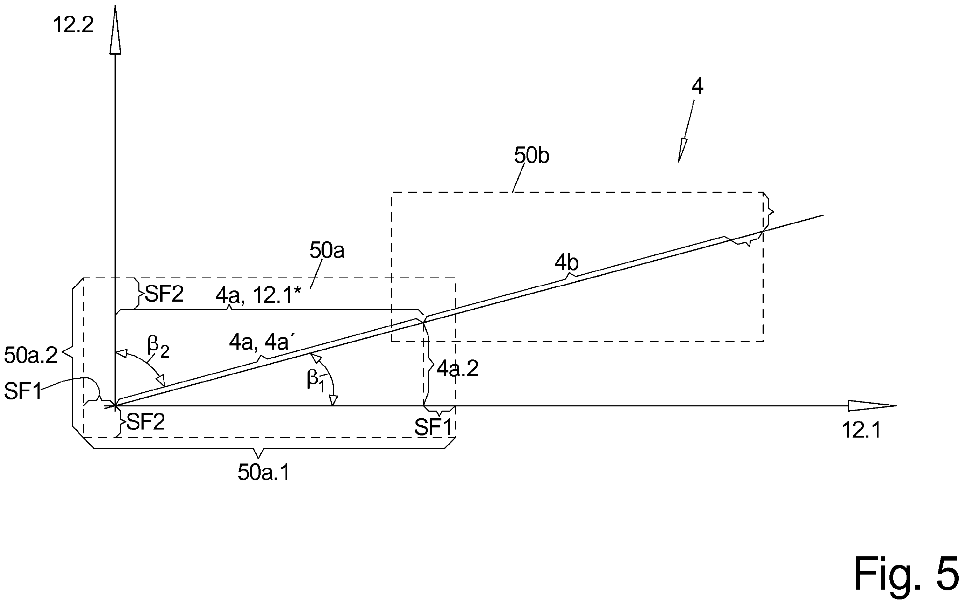

Zum einen lässt sich dadurch das Linien-Abbild 4 in Abschnitte 4a unterteilen, die somit in diesem Fall in der Erstreckungsrichtung 12.1 jeweils die gleiche Abschnitts-Länge 4a1 aufweisen, wie am besten in **Figur 5** dargestellt.

Aus der bekannten Verlaufsrichtung des Linien-Abbildes 4 kann damit in jedem Abschnitt 4a die Abschnitts-Länge 4a2 in der anderen Erstreckungsrichtung 12.2 des Sensors bestimmt werden.

Damit lässt sich um den Verlauf dieses Abschnittes 4a herum jeweils ein Fenster z. B. 50a legen, in dem die primäre Teillänge 12.1*, die ja der Abschnittslänge 4a1 in dieser Richtung entspricht, beidseitig um jeweils einen ersten Sicherheitszuschlag SF1 vergrößert wird und umgekehrt die Abschnittslänge 4a2 in der anderen Erstreckungsrichtung 12.2 beidseitig um jeweils einen zweiten Sicherheitszuschlag SF2 vergrößert wird und somit das Fenster 50a mit seinen Fenster-Längen 50a1, 50a2 hinsichtlich Größe und Position definiert ist.

Dies kann für alle Abschnitte 4a des Linien-Abbildes 4 analog durchgeführt werden und damit sind alle Fenster 50a, b definiert.

Für den anschließenden Mess-Scan werden dann aus den jeweiligen Fenstern 50a,b die Helligkeitswerte sämtlicher Pixel in den Fenstern 50a, b ausgelesen, wobei im Überlappungsbereich enthaltene Pixel hinsichtlich ihres Helligkeitswertes natürlich ebenfalls nur einmal ausgelesen und bei der Weiterverarbeitung berücksichtigt werden.

Sollte sich bei dem Mess-Scan ergeben, dass das Linien-Abbild 4 in seinem Verlauf eine Lücke aufweist - wie in **Figur 3c** dargestellt - oder auch ohne Lücke abseits des Linien-Abbildes 4 weitere beleuchtete Bereiche auf dem Sensor 12 vorhanden sind, so wird wie folgt vorgegangen:

Falls das Linien-Abbild 4 eine Lücke aufweist, wie in **Figur 3c** dargestellt, werden diejenigen Fenster 50b, 50c, die von dieser Lücke berührt sind, in der Querrichtung zur primären Erstreckungsrichtung 4'des Lichtlinien-Abbildes 4 - der jeweils tangentialen Richtung an einem bestimmten Punkt des Lichtlinien-Abbildes 4, wie an den Rändern der Lücke eingezeichnet -, die ja hier die Erstreckungsrichtung 12.1 ist, also in Erstreckungsrichtung 12.2, auf die gesamte Erstreckung des Sensors 12 in dieser zweiten Erstreckungsrichtung 12.2 ausgedehnt, um einen zum übrigen Linien-Abbild 4 eventuell querversetzten Teil des Linien-Abbildes 4 zu erfassen. Ist ein solcher querversetzter Teil nicht in diesen erweiterten Fenstern enthalten, wird dieser Mess-Scan nicht verwendet und ein neuer Lage-Scan durchgeführt.

Eine weitere Frage, die sich stellt, besteht darin, wie oft ein Lage-Scan - der immer tote Zeit für den eigentlichen Messvorgang darstellt - durchgeführt werden muss, also ob vor jedem Mess-Scan ein Lage-Scan erfolgen muss oder ob nach einem Lage-Scan mehrere Mess-Scans unmittelbar hintereinander durchgeführt werden können.

Zu diesem Zweck kann - wie in **Figur 3b** dargestellt - für jedes einzelne Fenster 50 a, b überprüft werden ob der vom dem jeweiligen Fenster umgebene Abschnitt 4a zu den längs-Kanten des ihn umgebenden Fensters einen ausreichenden Mindest-Sicherheitsabstand MS2 einhält.

Wenn dies für alle Fenster 50 a, b gegeben ist, wird mit den gleichen Fenstern ein erneuter Mess-Scan durchgeführt ohne zuvor einen Lage-Scan durchzuführen.

Wenn nicht, wird an der entsprechenden Stelle, an der der Mindest-Sicherheitsabstand MS2 nicht eingehalten ist, in der entsprechenden Richtung das umgebende Fenster so erweitert, dass dieser zweite Mindest-Sicherheitsabstand MS2 eingehalten wird, und mit dem so veränderten Fenster und damit veränderten Fensterbereich 50* der nächste Mess-Scan durchgeführt.

Dabei kann eine Maximalgröße für die Fenster vorgegeben sein, welche nicht überschritten werden darf und bei Überschreitung ein neuer Lage-Scan durchgeführt wird.

Um die Sicherheit zu erhöhen, dass bei einem Mess-Scan das gesamte Linien-Abbild 4 erfasst wurde, kann zusätzlich - vor der Verwendung der Rohdaten eines Mess-Scans für die weitere Auswertung und die Ergebnisdaten - ebenfalls geprüft werden, ob in analoger Weise wie zuvor beschrieben ein - dann jedoch meist kleinerer - erster Mindest-Sicherheitsabstand MS1 zu den Rändern, insbesondere längs-Rändern, des den jeweiligen Abschnitt 4a umgebenden Fensters z.B. 50a eingehalten ist.

### BEZUGSZEICHENLISTE

- 1: Objekt
- 2: Oberfläche
- 2': Oberflächen-Kontur
- 2a: Aufwölbung
- 3: Lichtlinie
- 3': Lichtstrahl
- 4: Linien-Abbild
- 4': Verlaufsrichtung
- 4a: Abschnitt
- 4a1,4a2: Abschnitts-Länge
- 5,5': Blickrichtung
- 6: Detektoreinrichtung
- 7: Bewegungsrichtung
- 8: Erstreckungsrichtung
- 9: Bilddatenspeicher
- 10: Einzelbild-Roh-Daten
- 10': Einzelbild-Kompakt-Daten
- 11: elektronische Verarbeitungseinheit
- 12: optischer Sensor
- 12.1, 12.2: Erstreckungsrichtung
- 12.1*: primäre Teillänge
- 13a, b: paralleler Ausgang
- 14: Laser-Lichtquelle
- 15: Interner Speicher
- 16: Gehäuse
- 17: Abstrahlrichtung
- 18: Beobachtungsbreite
- 19: Spiegel
- 20: Hauptebene
- 21: Lotrechte, lotrechte Ebene
- 22: Basisfläche
- 23: Durchlass
- 24: Platine
- 25: Zwischenspeicher
- 26: Stecker
- 50a, b: Fenster
- 50a1: Länge
- 50a2: Länge
- 50*: Fenster-Bereich
- α: Triangulations-Winkel
- α₁,α₂: Zwischenwinkel
- β1,β2: Anstiegswinkel
- P1.1: Pixel
- P*: virtuelles Pixel
- D1.1: Datensatz
- MS1, MS2: Sicherheitsabstand
- Z1: Zeile
- R1: Reihe
- S1, S2: Scan
- SF1, SF2: Sicherheits-Zuschlag
- b, B: Breite

## Patentansprüche

1. **Verfahren** zur berührungslosen Ermittlung der Oberflächen-Daten, z. B.
der Oberflächen-Kontur (2'), von Objekten (1) mittels des Lichtschnitt-Triangulations-Verfahrens, indem
a) wenigstens ein fächerförmiger Lichtstrahl (3') in einer Abstrahlrichtung (17) auf die Oberfläche (2) des Objektes (1) gerichtet wird,
b) wobei die Blickrichtung (5) einer Detektoreinrichtung (6) in einem Triangulationswinkel (α) zur Abstrahlrichtung (17) des Lichtstrahles (3') steht,
c) die auf der Oberfläche (2) dadurch erzeugte Lichtlinie (3) von der Detektoreinrichtung (6), die einen flächigen optischen Sensor (12) umfasst, als Linien-Abbild (4) der Lichtlinie (3) in Form eines Einzelbildes aufgenommen wird und als Einzelbild-Roh-Daten (10) der Lichtlinie (3) gespeichert wird,
d) diese Einzelbild-Ermittlung gemäß Schritt c) in einer Bewegungsrichtung (7), die quer zur Erstreckungsrichtung (8) der Lichtlinie (3) definiert ist, versetzt vielfach hintereinander durchgeführt wird, und dadurch aus den so jeweils erhaltenen Einzelbild-Roh-Daten (10) der Lichtlinien (3) die die gesamte Oberflächen-Kontur (2') beschreibenden Ergebnisdaten berechnet werden,
wobei
e) als Lage-Scan eine Einzelbild-Ermittlung gemäß Schritt c) mit verringerter Auflösung durchgeführt wird, wobei aus der aus dem Lage-Scan bekannten Lage und der Gestalt des Linien-Abbildes (4) auf dem flächigen optischen Sensor (12) automatisch Fenster (50) auf dem Sensor (12) so festgelegt werden, dass sie jeweils Teile des Linien-Abbildes (4) enthalten und in der Summe das gesamte Linien-Abbild (4) enthalten,
f) danach als Mess-Scans wenigstens eine Einzelbild-Ermittlung gemäß Schritt c) mit höherer Auflösung als beim Lage-Scan durchgeführt wird, bei dem nur die Fenster-Roh-Daten (10a, b) aus den Fenstern (50a, b) ausgelesen und zu Einzelbild-Roh-Daten (10) zusammengesetzt werden, die dem gesamten Linien-Abbild (4) auf dem Sensor (12) entsprechen,
g) für die Ermittlung der die Oberflächen-Kontur (2') beschreibenden Ergebnisdaten gemäß Schritt d) nur die Einzelbild-Roh-Daten (10) der Mess-Scans gemäß Merkmal f) verwendet werden,
**dadurch gekennzeichnet, dass**
h) nach jedem Mess-Scan geprüft wird, ob dieser Mess-Scan ein lückenloses Linien-Abbild (4) ergeben hat und falls nicht
h1) entweder vor dem nächsten Mess-Scan ein neuer Lage-Scan durchgeführt wird,
h2) oder diejenigen Fenster (50), die vollständig die Lücke des Abbildes (4) enthalten, in derjenigen der beiden Erstreckungsrichtungen (12.1, 12.2) des Sensors (12), die primär quer zur Verlaufsrichtung (4') des Linien-Abbildes (4) gerichtet ist, auf die gesamte Erstreckung des Sensors (12) in dieser Erstreckungsrichtung vergrößert und für diese vergrößerten Fenster (50a, b) erneut Fenster-Roh-Daten (10a, b) ermittelt werden und überprüft wird, ob diese die Lücke vollständig schließen und ob ein fehlendes Stück des Linien-Abbildes versetzt zum Verlauf des restlichen Linien-Abbildes in den vergrößerten Fenstern (50a, b) enthalten ist, und abhängig davon der nächste Mess-Scan oder ein neuer Lage-Scan durchgeführt wird.

2. Verfahren nach Anspruch 1,
**dadurch gekennzeichnet, dass**
im Schritt e)
e1) die Einzelbild-Roh-Daten (10) des gesamten flächigen optischen Sensors (12) benutzt, insbesondere ausgelesen, werden, die somit zumindest das gesamte Linien-Abbild (4), wiedergeben,
e2) aus den Einzelbild-Roh-Daten (10) hinsichtlich der Datenmenge verringerte Einzelbild-Kompakt-Daten (10') erzeugt werden, die mit verringerter Auflösung die Lage und die Gestalt des Linien-Abbildes (4) wiedergeben.

3. Verfahren nach Anspruch 2,
**dadurch gekennzeichnet, dass**
beim Lage-Scan die Auflösung der Einzelbild-Kompakt-Daten (10') gegenüber der Einzelbild-Rohdaten (10) verringert wird, indem
- die Lichtwerte einer Pixelgruppe von unmittelbar aneinander angrenzenden Pixeln der Einzelbild-Rohdaten (10) zu einem einzigen virtuellen Pixel (P*) als Teil der Einzelbild-Kompaktdaten (10') zusammengefasst werden mit
∘ entweder einer Lage des virtuellen Pixels (P*) im Zentrum der zusammengefassten Pixelgruppe und
∘ einem Helligkeitswert des virtuellen Pixels (P*) in Form eines Mittelwertes oder Summenwertes aller Pixel der Pixelgruppe,
∘ oder einer Lage des virtuellen Pixels (P*) an der Stelle des Pixels der betrachteten Pixelgruppe mit dem höchsten Helligkeitswert und
∘ einem Helligkeitswert des virtuellen Pixels (P*) entsprechend dem Helligkeitswert dieses hellsten Pixels der Pixelgruppe,
- und die zueinander beabstandeten virtuellen Pixel (P*) die die Lage und Gestalt des Linien-Abbildes (4) wiedergebenden Einzelbild-Kompaktdaten (10') bilden.

4. Verfahren nach Anspruch 3,
**dadurch gekennzeichnet, dass**
die Bestimmung der Lage und des Helligkeitswertes der virtuellen Pixel bereits im Analogteil, also im Sensor (12) durchgeführt wird, noch vor dem Auslesen der Daten aus dem Sensor (12).

5. Verfahren nach einem der Ansprüche 2 bis 4,
**dadurch gekennzeichnet, dass**
in jeder der Erstreckungsrichtungen (12.1, 12.2) des flächigen Sensors (2) nur jeweils jeder fünfte, besser nur jeder zehnte Pixel ausgelesen und für die Einzelbild-Kompakt-Daten (10') verwendet wird.

6. Verfahren nach einem der vorhergehenden Ansprüche, **dadurch gekennzeichnet, dass**
als höhere Auflösung des Mess-Scans gegenüber dem Lage-Scan
- entweder die volle Auflösung der Einzelbild-Roh-Daten (10) verwendet wird
- oder ein festgelegtes mehrfaches der für den Lage-Scan verwendeten geringeren Auflösung.

7. Verfahren nach einem der vorhergehenden Ansprüche, **dadurch gekennzeichnet, dass**
ab dem zweiten Mess-Scan nach einem voran gegangenen Lage-Scan nach Durchführung dieses Mess-Scans
- geprüft wird, ob das ermittelte Linien-Abbild (4) an jeder Stelle einen vorgegebenen ersten Mindest-Sicherheitsabstand (MS1) zu den Außenkanten des sich aus den überlappenden Fenstern (50) ergebenden Fensterbereiches (50*) einhält,
- wenn ja, der Mess-Scan verwendet wird,
- wenn nein, der Mess-Scan verworfen und ein neuer Lage-Scan durchgeführt wird.

8. Verfahren nach Anspruch 7, **dadurch gekennzeichnet, dass**
nach jedem Mess-Scan, der ein vollständiges Linien-Abbild (4) ergeben hat,
- geprüft wird, ob das ermittelte Linien-Abbild (4) einen vorgegebenen zweiten Mindest-Sicherheitsabstand (MS2) gegenüber den Außenkanten des sich aus den überlappenden Fenstern (50) ergebenden Fensterbereiches (50*) eingehalten wird und
- wenn ja, die bisher verwendeten Fenster (50a, b) für den nächsten Mess-Scan verwendet werden,
- wenn nicht, für den nächsten Mess-Scan an der entsprechenden Stelle des Linien-Abbildes (4) das um diese Stelle des Linien-Abbildes (4) herum positionierte Fenster (z.B. 50d) so erweitert wird, dass der vorgegebene zweite Mindest-Sicherheitsabstand (MS2) eingehalten wird und der so veränderten Fenster-Bereich (50*) für den nächsten Mess-Scan verwendet wird.

9. Verfahren nach einem der vorhergehenden Ansprüche, **dadurch gekennzeichnet, dass**
- die Fenster (50) rechteckige Fenster (50) sind, deren Kanten sich in der ersten Erstreckungsrichtung (12.1) und der zweiten Erstreckungsrichtung (12.2) des flächigen Sensors (12) erstrecken und/oder
- in derjenigen Erstreckungsrichtung (12.1), die primär in Richtung der Breite (B) des Lichtlinien-Abbildes (4) verläuft, die Kantenlänge des Fensters (zur 50) ein vorbestimmtes Vielfaches der Breite (B) des Lichtlinien-Abbildes (4) ist.

10. Verfahren nach einem der vorhergehenden Ansprüche, **dadurch gekennzeichnet, dass**
bei einer vorgegebenen Maximal-Anzahl an Fenstern (50a, b) auf dem Sensor (12) die Länge des Sensors (12) in derjenigen Erstreckungsrichtung (12.1), in der sich das Linien-Abbild (4) primär erstreckt, durch diese Maximal-Anzahl dividiert wird und die so erhaltende primäre Teil-Länge (12.1*) in dieser Erstreckungsrichtung (12.1) um einen festgelegten Prozentsatz, z. B. 15 Prozent, als durchschnittliche Fenster-Länge in dieser ErstreckungsRichtung (12.1) festgelegt wird.

11. Verfahren nach einem der vorhergehenden Ansprüche, **dadurch gekennzeichnet, dass**
die Fenster (50a, 50b..) wie folgt festgelegt werden:
- ein Abschnitt (4a) des Linien-Abbildes (4) mit vorgegebener Abschnitts-Länge (4a1) in der primären Erstreckungsrichtung (12.1) wird hinsichtlich seines Verlaufes auf dem Sensor (12) bestimmt, indem der Anstiegswinkel (β1) und (β2) dieses Abschnittes (4a) gegenüber der ersten Erstreckungsrichtung (12.1) des Sensors (12) und der zweiten Erstreckungsrichtung (12.) bestimmt wird, und daraus die Erstreckungen (4a1, 4a2) des Abschnittes (4 a) in die beiden Erstreckungsrichtungen (12.1, 12.2),
- in derjenigen Erstreckungsrichtung, (z.B. 12.1) gegenüber der der Anstiegswinkel (β1) geringer ist als der andere Anstiegswinkel (β2), das diesen Abschnitt (4a) vollständig einschließende Fenster (50a) so festgelegt wird, dass
- die Kantenlänge (50a.1) des Fensters (50a) in der ersten Erstreckungsichtung (12.1) um das Doppelte eines Sicherheitszuschlages (SF1) größer gewählt wird als die Erstreckung (4a1) des Abschnittes (4a) in diese Erstreckungsichtung (12.1),
- die Kantenlänge (50a.2) des Fensters (50a) in der zweiten Erstreckungsrichtung (12.2) um das Doppelte eines Sicherheitszuschlag (SF2) größer gewählt wird als die Erstreckung (4a2) des Abschnittes (4a) in die andere Erstreckungsrichtung (12.2).

12. Verfahren nach Anspruch 11, **dadurch gekennzeichnet, dass**
als vorgegebene Abschnitts-Länge (4a1) des Abschnittes (4a) die primäre Teil-Länge (12.1*) eines Fensters gewählt wird,
oder/
als vorgegebene Abschnitts-Länge (4a1) des Abschnittes (4a) eine Länge entsprechend einer Aneinanderreihung einer vorgegebenen Anzahl von Pixeln des Sensors (12) gewählt wird.

13. **Vorrichtung** mit
- einer Laser-Lichtquelle (14),
- einer Detektoreinrichtung (6) mit einem flächigen optischen Sensor (12) und einer elektronischen Verarbeitungseinheit (11) zur Bilddatenverarbeitung und Berechnung der Ergebnisdaten (2'), wobei der optische Sensor (12) eine Bauart besitzt, die die Festlegung von Fenstern (50 a, b), aus denen Messdaten ausschließlich ausgelesen werden sollen, vor der Durchführung des entsprechenden Scans erfordert,
**dadurch gekennzeichnet, dass**
die Vorrichtung zur Durchführung eines Verfahrens nach einem der vorhergehenden Ansprüche eingerichtet ist.

14. Vorrichtung nach Anspruch 13, **dadurch gekennzeichnet, dass** der optische Sensor (12) einen internen Datenspeicher umfasst.

## Claims

1. Method for the contactless determination of surface data, e.g. the surface contour (2'), of objects (1) using the light-section triangulation method, in that
a) at least one fan-shaped light beam (3') is directed in an radiation direction (17) onto the surface (2) of the object (1),
b) wherein the viewing direction (5) of a detector device (6) is arranged at a triangulation angle (α) to the radiation direction (17) of the light beam (3'),
c) the light line (3) thereby generated on the surface (2) is recorded by the detector device (6), which comprises a planar optical sensor (12), as a line image (4) of the light line (3) in the form of a single image and is stored as single image raw data (10) of the light line (3),
d) this single image determination according to step c) is carried out in a direction of movement (7), which is defined transversely to the direction of extension (8) of the light line (3), multiple times in sequence and thereby from the obtained respective single image raw data (10) resultant data are calculated describing the entire surface contour (2'), where
e) a single image determination according to step c) with reduced resolution is carried out as a position scan, wherein windows (50) are automatically defined on the sensor (12) based on the position known from the position scan and the shape of the line image (4) on the planar optical sensor (12) in such a way that they each contain parts of the line image (4) and in sum contain the entire line image (4),
f) thereafter at least one single image determination according to step c) is carried out as measurement scans with a higher resolution than for the position scan, wherin only the window raw data (10a, b) are read out of the windows (50a, b) and combined to form single image raw data (10) which correspond to the entire line image (4) on the sensor (12),
g) for the determination of the resultant data describing the surface contour (2') according to step d) only the single image raw data (10) of the measurement scans according to feature f) are used,
**characterized in that**
h) after each measurement scan it is checked whether this measurement scan has resulted in a gapless line image (4) and if not
h1) either a new position scan is performed before the next measurement scan
h2) or those windows (50), which completely contain the gap of image (4), **in that** of the two directions of extension (12.1, 12. 2) of the sensor (12), which is primarily directed transversely to the direction (4') of the line image (4), are enlarged to the entire extension of the sensor (12) in this direction of extension and for these enlarged windows (50a, b) window raw data (10a, b) are again determined and checked, whether they close the gap completely and whether a missing piece of the line image is contained in the enlarged windows (50a, b) offset to the course of the remaining linien image, and depending on that, the next measuring scan or a new position scan is performed.

2. Method according to claim 1,
**characterized in that**
in step e)
e1) the single image raw data (10) of the entire planar optical sensor (12) are used, in particular read out, which thus at least produce the entire line image (4),
e2) from the single image raw data (10) reduced single image compact data (10') are generated with respect to the amount of data, which reproduce the position and the shape of the line image (4) with reduced resolution.

3. Method according to claim 2,
**characterized in that**
during the position scan, the resolution of the single image compact data (10') is reduced compared to the single image raw data (10) by
- the light values of a pixel group of directly adjacent pixels of the single image raw data (10) are combined to a single virtual pixel (P*) as part of the image compact data (10') with
- either a position of the virtual pixel (P*) in the center of the combined pixel group and
- a brightness value of the virtual pixel (P*) as a mean value or sum of all pixels of the pixel group,
- or a position of the virtual pixel (P*) at the position of the pixel of the considered pixel group with the highest brightness value and
- a brightness value of the virtual pixel (P*) corresponding to the brightness value of this brightest pixel of the pixel group,
- and the virtual pixels (P*) spaced apart from each other form the single image compact data (10') representing the position and shape of the line image (4).

4. Method according to claim 3,
**characterized in that**
the determination of the position and the brightness value of the virtual pixels is already done in the analog part, i.e. in the sensor (12), before the data is read out of the sensor (12).

5. Method according to one of the claims 2 to 4,
**characterized in that**
in each of the extension directions (12.1, 12.2) of the flat sensor (2) only every fifth, better only every tenth, pixel is read out and used for the single image compact data (10').

6. Method according to one of the preceding claims,
**characterized in that**
as higher resolution of the measurement scan compared to the position scan
- either the full resolution of the single image raw data (10) is used
- or a fixed multiple of the lower resolution used for the position scan is used.

7. Method according to one of the preceding claims,
**characterized in that**
from the second measurement scan after a preceding position scan after this measurement scan has been performed
- it is checked whether the determined line image (4) maintains a predetermined first minimum safety distance (MS1) at each position to the outer edges of the window area (50*) resulting from the overlapping windows (50),
- if yes, the measurement scan is used,
- if no, the measurement scan is rejected and a new position scan is performed.

8. Method according to claim 7,
**characterized in that**
after each measurement scan that has produced a complete line image (4),
- it is checked whether the determined line-image (4) maintains a predetermined second minimum safety distance (MS2) from the outer edges of the window area (50*) resulting from the overlapping windows (50), and
- if yes, the previously used windows (50a, b) are used for the next measurement scan,
- if not, for the next measurement scan at the corresponding position of the line image (4) the window (e.g. 50d) positioned around this position of the line image (4) is extended in such a way that the specified second minimum safety distance (MS2) is maintained and the window area (50*) thus changed is used for the next measurement scan.

9. Method according to one of the preceding claims,
**characterized in that**
- the windows (50) are rectangular windows (50) whose edges extend in the first direction of extension (12.1) and the second direction of extension (12.2) of the flat sensor (12)
and/or
- **in that** direction of extension (12.1), which primarily runs in the direction of the width (B) of the light-line image (4), the edge length of the window (50) is a predetermined multiple of the width (B) of the light-line image (4).

10. Method according to one of the preceding claims,
**characterized in that**
in the case of a predetermined maximum number of windows (50a, b) on the sensor (12), the length of the sensor (12) **in that** extension direction (12.1) in which the line image (4) primarily extends is divided by this maximum number and the primary partial length (12.1*) thus obtained in this extension direction (12.1) is determined by a fixed percentage, e.g. 15 percent, as the average window length in this extension direction (12.1).

11. Method according to one of the preceding claims,
**characterized in that**
the windows (50a, 50b..) are defined as follows:
- a section (4a) of the line image (4) with a predetermined section length (4a1) in the primary extension direction (12.1) is determined with respect to its course on the sensor (12) by determining the slope angle (β1) and (β2) of this section (4a) with respect to the primary extension direction (12.1). 1) of the sensor (12) and the second direction of extension (12.2), and from this the extensions (4a1, 4a2) of the section (4a) in the two directions of extension (12.1, 12.2) are determined,
- in the direction of extension (e.g. 12.1) in relation to which the slope angle (β1) is less than the other slope angle (β2), the window (50a) completely enclosing this section (4a) is fixed in such a way that
- the edge length (50a.1) of the window (50a) in the first extension direction (12.1) is selected greater by twice a safety margin (SF1) than the extension (4a1) of the section (4a) in this extension direction (12.1),
- the edge length (50a.2) of the window (50a) in the second direction of extension (12.2) is selected greater by twice a safety margin (SF2) than the extension (4a2) of the section (4a) in this extension direction (12.2).

12. Method according to claim 11,
**characterized in that**
the primary partial length (12.1*) of a window is selected as the predetermined section length (4a1) of section (4a),
or/
a length corresponding to a sequence of a predetermined number of pixels of the sensor (12) is selected as a predetermined section length (4a1) of the section (4a).

13. Device with
- a laser light source (14),
- a detector device (6) with a planar optical sensor (12) and an electronic processing unit (11) for image data processing and calculation of the resultant data (2'),
wherein
- the optical sensor (12) is of a type which requires the definition of windows (50 a, b) from which measurement data are to be read out exclusively prior to the execution of the corresponding scan,
**characterized in that**
the device is equipped to perform a method according to one of the preceding claims.

14. Device according to claim 13,
**characterized in that**
the optical sensor (12) comprises an internal data memory.

## Revendications

1. **Procédé** pour la détermination sans contact de données de surface, par exemple du contour de surface (2') d'objets (1) au moyen de la méthode de triangulation de la section lumineuse, en ce que
a) au moins un faisceau lumineux en forme d'éventail (3') est dirigé dans une direction de rayonnement (17) sur la surface (2) de l'objet (1),
b) dans lequel la direction de visée (5) d'un dispositif de détection (6) forme un angle de triangulation (α) avec la direction de rayonnement (17) du faisceau lumineux (3'),
c) la ligne lumineuse (3) ainsi générée sur la surface (2) est enregistrée par le dispositif de détection (6), qui comprend un capteur optique plan (12), sous la forme d'une image de ligne (4) de la ligne lumineuse (3) sous la forme d'une image unique et est stockée en tant que données brutes d'image unique (10) de la ligne lumineuse (3),
d) cette détermination d'image unique selon l'étape c) est effectuée plusieurs fois de suite de manière décalée dans une direction de mouvement (7) définie transversalement à la direction d'extension (8) de la ligne lumineuse (3), et de ce fait les données de résultat décrivant l'ensemble du contour de surface (2') sont calculées à partir des données d'image unique brutes respectives (10) des lignes lumineuses (3) ainsi obtenues, dans lequel
e) une détermination d'image unique selon l'étape c) avec une résolution réduite est effectuée sous la forme d'un balayage de position, dans laquelle des fenêtres (50) sont automatiquement déterminées sur le capteur (12) à partir de la position connue par le balayage de position et de la forme de l'image de ligne (4) sur le capteur optique plan (12) de telle sorte qu'elles contiennent chacune des parties de l'image de ligne (4) et contiennent au total l'image de ligne (4) complète,
f) ensuite, au moins une détermination d'image unique selon l'étape c) est effectuée sous forme de balayages de mesure avec une résolution plus élevée que dans le balayage de position, dans lesquels seules les données brutes de fenêtre (10a, b) sont lues dans les fenêtres (50a, b) et combinées pour former des données brutes d'image unique (10) qui correspondent à l'image de ligne (4) complète sur le capteur (12),
g) seules les données brutes (10) des balayages de mesure selon la caractéristique f) sont utilisées pour déterminer les données de résultat décrivant le contour de surface (2') selon l'étape d),
**caractérisé en ce que**
h) après chaque balayage de mesure, il est vérifié si ce balayage de mesure a produit une image de ligne (4) complète et si ce n'est pas le cas
h1) soit un nouveau balayage de position est effectué avant le prochain balayage de mesure,
h2) soit les fenêtres (50) qui contiennent complètement l'écart de l'image (4) dans celui des deux directions d'extension (12.1, 12. 2) du capteur (12), qui est dirigé principalement transversalement à la direction d'extension (4') de l'image de ligne (4), est agrandi à toute l'extension du capteur (12) dans cette direction d'extension, et les données brutes des fenêtres (10a, b) sont à nouveau déterminées pour ces fenêtres agrandies (50a, b) et il est vérifié, si elles comblent complètement l'écart et si un morceau manquant de l'image de ligne est contenu dans les fenêtres agrandies (50a, b) décalé par rapport à l'image de ligne restante, et en fonction de cela, le prochain balayage de mesure ou un nouveau balayage de position est effectué.

2. Procédé selon la revendication 1,
**caractérisée en ce que**
dans l'étape e)
e1) les données brutes d'image unique (10) de l'ensemble du capteur optique plan (12) sont utilisées, en particulier lues, et ainsi au moins l'image de ligne (4) complète est reproduite,
e2) à partir des données brutes d'image unique (10), des données compactes d'image unique (10') réduites en termes de quantité de données sont générées, qui reproduisent la position et la forme de l'image de ligne (4) avec une résolution réduite.

3. Procédé selon la revendication 2,
**caractérisé en ce que,**
lors du balayage de position, la résolution des données compactes d'image unique (10') est réduite par rapport à celle des données brutes d'image unique (10)
- en combinant les valeurs de luminosité d'un groupe de pixels de pixels directement adjacents des données brutes d'image unique (10) en un seul pixel virtuel (P*) faisant partie des données compactes d'image unique (10') avec
∘ soit une position du pixel virtuel (P*) au centre du groupe de pixels combinés, et
∘ une valeur de luminosité du pixel virtuel (P*) sous la forme d'une moyenne ou d'une somme de tous les pixels du groupe de pixels,
∘ soit une position du pixel virtuel (P*) à la position du pixel du groupe de pixels considéré ayant la valeur de luminosité la plus élevée et
∘ une valeur de luminosité du pixel virtuel (P*) correspondant à la valeur de luminosité de ce pixel le plus lumineux du groupe de pixels,
- et les pixels virtuels (P*) espacés les uns des autres formant les données compactes d'image unique (10') représentant la position et la forme de l'image de ligne (4).

4. Procédé selon la revendication 3,
**caractérisé en ce que**
la détermination de la position et de la valeur de luminosité des pixels virtuels est déjà effectuée dans la partie analogique, c'est-à-dire dans le capteur (12), avant même que les données ne soient lues par le capteur (12).

5. Procédé selon l'une quelconque des revendications 2 à 4,
**caractérisé en ce que**
dans chacune des directions d'extension (12.1, 12.2) du capteur plan (2), un pixel sur cinq seulement, de préférence un pixel sur dix seulement, est lu et utilisé pour les données compactes d'image unique (10').

6. Procédé selon l'une des revendications précédentes,
**caractérisée en ce que**
en tant que résolution plus élevée du balayage de mesure par rapport au balayage de position
- soit la pleine résolution des données brutes d'image unique (10) est utilisée
- soit un multiple fixe de la résolution inférieure utilisée pour le balayage de la position est utilisé.

7. Procédé selon l'une des revendications précédentes,
**caractérisé en ce que**
à partir du deuxième balayage de mesure, après un balayage de position précédent, après que ce balayage de mesure ait été effectué
- il est vérifié si l'image de ligne (4) déterminée maintient une première distance de sécurité minimale prédéterminée (MS1) à chaque position par rapport aux bords extérieurs de la zone de fenêtre (50*) résultant du chevauchement des fenêtres (50),
- si oui, le balayage de mesure est utilisé,
- si non, le balayage de mesure est rejeté et un nouveau balayage de position est effectué.

8. Procédé selon la revendication 7,
**caractérisée en ce que**
après chaque balayage de mesure qui a produit une image de ligne (4) complète,
- il est vérifié si l'image de ligne (4) déterminée maintient une deuxième distance de sécurité minimale prédéterminée (MS2) par rapport aux bords extérieurs de la zone de fenêtre (50*) résultant du chevauchement des fenêtres (50), et
- si oui, les fenêtres utilisées précédemment (50a, b) sont utilisées pour le prochain balayage de mesure,
- sinon, pour le prochain balayage de mesure à la position correspondante de l'image de ligne (4), la fenêtre (par exemple 50d) positionnée autour de cette position de l'image de ligne (4) est étendue de telle sorte que la deuxième distance de sécurité minimale prédéterminée (MS2) soit maintenue et que la zone de fenêtre (50*) ainsi modifiée soit utilisée pour le prochain balayage de mesure.

9. Procédé selon l'une des revendications précédentes,
**caractérisée en ce que**
- les fenêtres (50) sont des fenêtres rectangulaires (50) dont les bords s'étendent dans la première direction d'extension (12.1) et la deuxième direction d'extension (12.2) du capteur plan (12) et/ou
- dans la direction d'extension (12.1) qui s'étend principalement dans la direction de la largeur (B) de l'image de ligne lumineuse (4), la longueur du bord de la fenêtre (jusqu'à 50) est un multiple prédéterminé de la largeur (B) de l'image de ligne lumineuse (4).

10. Procédé selon l'une des revendications précédentes,
**caractérisé en ce que**
pour un nombre maximum prédéterminé de fenêtres (50a, b) sur le capteur (12), la longueur du capteur (12) dans cette direction d'extension (12. 1), dans laquelle l'image de ligne (4) s'étend principalement, est divisée par ce nombre maximum et la longueur partielle primaire (12.1*) ainsi obtenue dans cette direction d'extension (12.1) est déterminée par un pourcentage fixe, par exemple 15 pour cent, comme la longueur moyenne de la fenêtre dans cette direction d'extension (12.1).

11. Procédé selon l'une des revendications précédentes,
**caractérisée en ce que**
les fenêtres (50a, 50b) sont déterminées comme suit :
- une section (4a) de l'image de ligne (4) avec une longueur de section prédéterminée (4a1) dans la première direction d'extension (12.1) est déterminée par rapport à sa trajectoire sur le capteur (12) en déterminant l'angle de montée (β1) et (β2) de cette section (4a) par rapport à la première direction d'extension (12.1) du capteur (12) et à la deuxième direction d'extension (12.2), et à partir de là les extensions (4a1, 4a2) de la section (4a) dans les deux directions d'extension (12.1, 12.2),
- dans la direction d'extension (par exemple 12.1) par rapport à laquelle l'angle de montée (β1) est inférieur à l'autre angle de montée (β2), la fenêtre (50a) entourant complètement cette section (4a) est définie de telle sorte que
- la longueur de bord (50a.1) de la fenêtre (50a) dans la première direction d'extension (12.1) est choisie pour être supérieure à l'extension (4a1) de la section (4a) dans cette direction d'extension (12.1) de deux fois une marge de sécurité (SF1),
- la longueur de bord (50a.2) de la fenêtre (50a) dans la deuxième direction d'extension (12.2) est choisie pour être supérieure de deux fois une marge de sécurité (SF2) à l'extension (4a2) de la section (4a) dans l'autre direction d'extension (12.2).

12. Procédé selon la revendication 11,
**caractérisé en ce que**
la longueur de section primaire (12.1*) d'une fenêtre est sélectionnée comme longueur de section prédéterminée (4a1) de la section (4a), ou/ une longueur correspondant à un enchaînement d'un nombre prédéterminé de pixels du capteur (12) est sélectionnée comme longueur de section prédéterminée (4a1) de la section (4a).

13. **Dispositif** avec
- une source de lumière laser (14),
- un dispositif de détection (6) avec un capteur optique plan (12) et une unité de traitement électronique (11) pour le traitement des données d'image et le calcul des données de résultat (2')
le capteur optique (12) étant d'un type nécessitant la définition de fenêtres à partir desquelles des données de mesure doivent être lues exclusivement avant l'exécution du balayage correspondant,
**caractérisé en ce que**
le dispositif est configuré pour exécuter un procédé selon l'une des revendications précédentes.

14. Dispositif selon la revendication 13,
**caractérisé en ce que**
le capteur optique (12) comprend une mémoire de données interne.
